# EUROPÄISCHE PATENTSCHRIFT

(11) **EP 4 235 158 B1**
(45) Veröffentlichungstag und Bekanntmachung des Hinweises auf die Patenterteilung: **14.05.2025**
(21) Anmeldenummer: 23175626.3
(22) Anmeldetag: 06.03.2018
(51) Int. Cl.: G01N 21/77, G01N 21/64

(54) **VORRICHTUNG ZUR TEMPERATURKOMPENSIERTEN OPTISCHEN ERFASSUNG EINES SAUERSTOFFGEHALTS EINES FLUIDS**
DEVICE FOR THE TEMPERATURE-COMPENSATED OPTICAL DETECTION OF AN OXYGEN CONTENT OF A FLUID
DISPOSITIF POUR LA DÉTECTION OPTIQUE COMPENSÉE EN TEMPÉRATURE D'UNE TENEUR EN OXYGÈNE D'UN FLUIDE

(30) Priorität: 13.03.2017 DE 102017204082
(43) Veröffentlichungstag der Anmeldung: 30.08.2023
(62) Teilanmeldung aus: 18712096.9
(73) Patentinhaber: Hamilton Bonaduz AG, 7402 Bonaduz (CH)
(72) Erfinder: Giardina, Marco, 2000 Neuchâtel (CH); Offenbeck, Bernd, 93057 Regensburg (DE); Schranz, Christoph, 7306 Fläsch (CH); Laubscher, Thomas, 7403 Rhäzüns (CH); Novotni, Dominik, 7000 Chur (CH); Schönfuss, Dirk, 7015 Tamins (CH)
(74) Vertreter: Ruttensperger Lachnit Trossin Gomoll

(56) Entgegenhaltungen:
- DE-C1- 19 913 783
- DE-U1- 202011 106 578
- US-A1- 2013 023 782

## Beschreibung

Die vorliegende Erfindung betrifft eine flächige Schichtbauteilanordnung zur temperaturkompensierten optischen Erfassung eines Sauerstoffgehalts eines Fluids gemäß den beigefügten Ansprüchen.

Eine gattungsgemäße Schichtbauteilanordnung ist aus der US 2013/0023782 A1 bekannt. Die aus der US 2013/0023782 A1 bekannte Schichtbauteilanordnung umfasst einen flächigen Fensterkörper, welcher auf einer Seite mit einem Luminophor beschichtet ist. Diese Druckschrift beschreibt eine Sensoranordnung mit einer solchen Schichtbauteilanordnung zur Messung einer Sauerstoffkonzentration eines Beatmungsgases auf Grundlage des an sich bekannten Messprinzips der sauerstoffinduzierten Lumineszenzlöschung ("luminescence quenching") von Luminophoren. Dabei werden im Reaktionsschichtkörper vorhandene Luminophore durch Bestrahlung mit der ersten elektromagnetischen Strahlung zur Abstrahlung einer von der ersten verschiedenen zweiten elektromagnetischen Strahlung angeregt. In der Regel ist die zweite elektromagnetische Strahlung langwelliger als die erste elektromagnetische Strahlung.

Vereinfacht zusammengefasst kann das zugrundeliegende Messprinzip wie folgt dargestellt werden: Durch die Bestrahlung mit der ersten elektromagnetischen Strahlung findet ein Energieeintrag in den Luminophor statt. Die dem Luminophor durch Bestrahlung erteilte Anregungsenergie gibt der Luminophor mit gewissen zeitlichem Versatz in Form der zweiten elektromagnetischen Strahlung wieder ab. Wird der durch Bestrahlung mit der ersten elektromagnetischen Strahlung angeregte Luminophor dagegen durch Sauerstoff kontaktiert, findet eine strahlungsfreie Abregung des Luminophors durch Energieübertrag an den kontaktierenden Sauerstoff statt. Auf diese Weise beeinflusst am Luminophor präsenter Sauerstoff dessen Abstrahlverhalten in Antwort auf die durch Bestrahlung erhaltene Anregung.

Der den Luminophor kontaktierende Sauerstoff beeinflusst dessen Abstrahlverhalten bei ansonsten identischer Anregung hinsichtlich der Intensität der zweiten elektromagnetischen Strahlung und hinsichtlich der Dauer der Abstrahlung der zweiten elektromagnetischen Strahlung. Die Auswertung des durch präsenten Sauerstoff beeinflussten Abstrahlverhaltens des Luminophors als Antwort auf die Bestrahlung mit der ersten elektromagnetischen Strahlung auf Grundlage der zeitlichen Charakteristik des Abstrahlverhaltens gilt gegenüber der Auswertung auf Grundlage der beeinflussten Intensität als die genauere Auswertung, da die Auswertung nach der zeitlichen Charakteristik der Abstrahlung der zweiten elektromagnetischen Strahlung im Gegensatz zur Auswertung nach deren Intensität von einem alterungsbedingten Ausbleichen des Luminophors unbeeinflusst oder wenigstens weniger stark beeinflusst ist.

Das Abstrahlverhalten von Luminophoren wird bei ansonsten gleichen Bedingungen außerdem von der Temperatur des Luminophors beeinflusst. Dies macht die Auswertung des in der Regel sensorisch beobachteten Abstrahlverhaltens in temperaturveränderlicher Umgebung schwierig. Eine temperaturveränderliche Umgebung liegt beispielsweise bei der Messung der Sauerstoffkonzentration in einem Beatmungsgas vor, das dem Patienten in der Regel mit einer anderen Temperatur zugeführt wird als dieser es nach einer gewissen Verstoffwechslung wieder ausatmet. Auch kann sich die Temperatur des exspiratorischen Beatmungsgases abhängig vom Gesundheitszustand des Patienten ändern.

Zur Lösung dieses Problems schlägt die US 2013/0023782 A1 gemäß einer Ausführungsform vor, den Fensterkörper aus einem für Infrarot-Strahlung durchlässigen Material zu bilden und die Temperatur des luminophorhaltigen Reaktionsschichtkörpers durch den Fensterkörper hindurch berührungslos durch einen Infrarot-Detektor zu messen. Dadurch soll gleichzeitig mit der Erfassung des Abstrahlverhaltens des Luminophors dessen Temperatur erfasst werden, so dass das Abstrahlverhalten in Kenntnis der Temperatur zutreffend ausgewertet werden kann.

Gemäß einer weiteren Ausführungsform der US 2013/0023782 A1 wird berührungslos Infrarot-Strahlung vom Fensterkörper erfasst, wobei dann der Fensterkörper so dünn auszubilden ist, dass die Temperatur seiner von der mit Luminophor beschichteten Oberfläche abgewandten Oberfläche etwa gleich der Temperatur des Luminophors ist.

Eine flächige Schichtbauteilanordnung für eine Sensoranordnung zur Messung eines Sauerstoffgehalts von Beatmungsgas ist außerdem aus der US 7,833,480 B2 bekannt. Auch diese Druckschrift lehrt, die durch die Temperaturabhängigkeit des Abstrahlverhaltens von Luminophoren systemimmanente Unsicherheit bei der Auswertung des erfassten Abstrahlverhaltens dadurch zu eliminieren, dass der Reaktionsschichtkörper durch eine Heizeinrichtung auf eine konstante bekannte Temperatur gebracht und dort gehalten wird. Damit ändert sich die Temperatur des Luminophors während der Erfassung nicht und das erhaltene Abstrahlsignal kann ausgewertet werden.

Nachteilig an der zuletzt genannten Lösung ist der hohe apparative Aufwand, da an der Schichtbauteilanordnung eine Heizeinrichtung vorzusehen ist, die mit Energie zu versorgen ist. Darüber hinaus kann die zusätzliche Heizeinrichtung das Messergebnis verfälschen oder die Temperaturabhängigkeit nicht in dem gewünschten Maße ausblenden, da es aufgrund des Messprinzips notwendig ist, dass der angeregte Luminophor mit Sauerstoff in Kontakt kommt. Somit ist ein gewisses Maß an konvektivem Wärmeübergang zwischen dem Reaktionsschichtkörper und dem hinsichtlich seines Sauerstoffgehalts zu erfassenden Messobjekt-Fluid unvermeidlich, so dass trotz Vorsehen einer Heizeinrichtung nicht die Temperatur des Luminophors während der Erfassung seiner Abstrahlung notwendigerweise genau bekannt ist.

Auch die von der gattungsgemäßen Druckschrift US 2013/0023782 A1 vorgeschlagene Lösung zur Erfassung der Temperatur des Reaktionsschichtkörpers und zur datentechnischen Temperaturkompensation des erfassten Abstrahlverhaltens ist ebenfalls nicht frei von Nachteilen.

Zum einen befinden sich bei der gattungsgemäßen Lösung zwei Strahlungsquellen und zwei Strahlungsdetektoren im selben Messraum. Die erste Strahlungsquelle soll durch Ausstrahlung der ersten elektromagnetischen Strahlung den Luminophor im Reaktionsschichtkörper anregen. Zwar wird diese Anregung üblicherweise nicht im infraroten Wellenlängenbereich elektromagnetischer Strahlung erfolgen, jedoch ist nicht ausgeschlossen, dass diese erste Strahlungsquelle neben der gewünschten ersten elektromagnetischen Strahlung auch mit weiteren Wellenlängen strahlt, die ins Infrarote reichen und somit eine Störsignalquelle bilden können.

Die zweite Strahlungsquelle ist der Luminophor des Reaktionsschichtkörpers, welcher sowohl die zweite elektromagnetische Strahlung als Antwort auf seine Anregung abstrahlt als auch eine seiner Temperatur entsprechende Infrarotstrahlung.

Zum einen können die Wellenlängen beider Strahlungen: zweite elektromagnetische Strahlung und Temperatur-Infrarotstrahlung, nahe beieinander liegen und somit nur schwer unterscheidbar sein, was wiederum eine wechselseitige Störquelle der jeweiligen Signale bildet.

Zum anderen wird der bekannte Reaktionsschichtkörper auf einer seiner Seiten mit dem Messobjekt-Fluid, dessen Sauerstoffgehalt zu erfassen ist, benetzt und wird auf seiner entgegengesetzten Seite hinsichtlich der von ihm ausgehenden Strahlung erfasst. Daher ist der bekannte Reaktionsschichtkörper zur ersten Strahlungsquelle sowie zu den Strahlungsdetektoren hin abzuschirmen, um zu verhindern, dass sauerstoffhaltiges Fluid auch von der Erfassungsseite her an den Luminophor des Reaktionsschichtkörpers gelangt und die Erfassung des Abstrahlverhaltens verfälscht.

Die wenigstens sauerstoffdichte Abschirmung des Reaktionsschichtkörpers zur ersten Strahlungsquelle und zur Detektoranordnung hin muss sowohl die zweite elektromagnetische Strahlung als auch die Temperatur-Infrarotstrahlung möglichst unbeeinträchtigt durchlassen, um das Abstrahlverhalten des Reaktionsschichtkörpers möglichst unverfälscht erfassen zu können. Dies führt zu einer erheblichen Einschränkung der zur Abschirmung verwendbaren Werkstoffe. Für manche Wellenlängenbereiche an zweiter elektromagnetischer Strahlung und an Temperatur-Infrarotstrahlung kann unter Umständen überhaupt kein Werkstoff gefunden werden, welcher beide elektromagnetischen Strahlungen ausreichend unverfälscht transmittiert.

Es ist daher Aufgabe der vorliegenden Erfindung, eine gattungsgemäße flächige Schichtbauteilanordnung derart weiterzubilden, dass die oben im Zusammenhang mit der bekannten gattungsgemäßen Schichtbauteilanordnung genannten Nachteile vermindert oder vollständig beseitigt werden. Es soll also eine Schichtbauteilanordnung bereitgestellt werden, welche eine sehr genaue optische Erfassung eines Sauerstoffgehalts eines Fluids durch Temperaturkompensation des erfassten Abstrahlverhaltens des Reaktionsschichtkörpers bei gleichzeitig möglichst einfachem konstruktivem Aufbau ermöglicht.

Diese Aufgabe wird erfindungsgemäß durch eine Schichtbauteilanordnung mit allen Merkmalen des Anspruchs 1 gelöst.

Durch die gesonderte Ausbildung von Reaktionsschichtkörper und Temperatur-Erfassungsschichtkörper werden die beiden Schichtkörper räumlich getrennt an einer fluidführenden Leitung oder an einem fluidaufnehmenden Gefäß vorgesehen, so dass die zur messtechnischen Erfassung der von beiden Schichtkörpern ausgehenden Strahlung notwendigen Vorrichtungen räumlich voneinander getrennt vorgesehen werden können. So kann die Strahlungsquelle der ersten elektromagnetischen Strahlung räumlich getrennt und damit abgeschirmt von einem Infrarot-Detektor angeordnet werden, da die Strahlungsquelle nur den Reaktionsschichtkörper bestrahlen muss und der Infrarot-Detektor nur den Temperatur-Erfassungsschichtkörper erfassen muss. Somit fällt die Strahlungsquelle der ersten elektromagnetischen Strahlung als Störquelle für die berührungslose Temperaturerfassung des Temperatur-Erfassungsschichtkörpers aus.

Weiterhin können der Reaktionssichtkörper und der Temperatur-Erfassungsschichtkörper in jeweils an ihre Anforderungen optimal angepassten Messumgebungen angeordnet werden, sodass die Erfassung der zweiten elektromagnetischen Strahlung vom Reaktionsschichtkörper ebenso optimal erfolgen kann wie die Erfassung der Infrarotstrahlung vom Temperatur-Erfassungsschichtkörper.

Wenn in der vorliegenden Anmeldung von einem Schichtkörper die Rede ist, so ist damit ausgesagt, dass dieser Körper als flächiger Körper in zwei zueinander orthogonalen Raumrichtungen eine wesentlich größere Abmessung aufweist als in seiner zu den beiden genannten Raumrichtungen jeweils orthogonalen Dickenrichtung. Die Dickenrichtung ist daher stets die kürzeste Abmessung des Schichtkörpers.

Grundsätzlich kann es ausreichen, dass der Reaktionsschichtkörper oder/und der Temperatur-Erfassungsschichtkörper nur eine einzige Schicht aufweisen. Jeder der Schichtkörper kann jedoch eine Mehrzahl von Schichten aufweisen, wenn dies für seine Funktion oder für seinen Einsatzzweck erforderlich oder förderlich ist.

Ein Problem bei der gesonderten Ausbildung von Reaktionsschichtkörper und Temperatur-Erfassungsschichtkörper liegt in der Beurteilung der Aussagekraft der am Temperatur-Erfassungsschichtkörper erfassten Temperatur für die tatsächliche Temperatur des Reaktionsschichtkörpers. Eine grundsätzlich mögliche Verwendung einer identischen Kopie des Reaktionsschichtkörpers als Temperatur-Erfassungsschichtkörper, um an einem der beiden Schichtkörper nur die zweite elektromagnetische Strahlung zu erfassen und am jeweils anderen Schichtkörper nur die Infrarotstrahlung zu erfassen, ist zum einen teuer und daher wirtschaftlich fragwürdig. Zum anderen ist ohne die Gewährleistung einer tatsächlich identischen Ausbildung der beiden Reaktionsschichtkörper und deren Anordnung unter möglichst identischen Betriebsbedingungen während der Erfassung der von ihnen ausgehenden Strahlung dennoch eine Kalibration notwendig, um aus der am Temperatur-Erfassungsschichtkörper erfassten Infrarotstrahlung ausreichend genau auf die tatsächliche Temperatur des Reaktionsschichtkörpers schließen zu können. Schließlich kann die am Luminophor anregbare zweite elektromagnetische Strahlung die Infrarot-Strahlung des Temperatur-Erfassungsschichtkörper stören.

Daher ist aus Gründen einer möglichst einfachen und kostengünstigen Konstruktion der erfindungsgemäßen flächigen Schichtbauteilanordnung der Temperatur-Erfassungsschichtkörper frei von Luminophor.

Damit ist sichergestellt, dass am Temperatur-Erfassungssichtkörper nicht unbeabsichtigterweise ein Luminophor zur Abstrahlung von elektromagnetischer Strahlung angeregt wird, die die Erfassung der von ihm temperaturbedingt ausgehenden Infrarot-Strahlung stören könnte. Da eine möglichst sichere Übertragung der mit Infrarot-Strahlungserfassung ermittelten Temperatur des Temperatur-Erfassungsschichtkörpers auf eine ausgehend hiervon angenommene oder bestimmte Temperatur des Reaktionsschichtkörpers ohnehin mittels einer Datenverarbeitungsvorrichtung auf Grundlage einer zuvor durchgeführten Kalibration erfolgen kann oder erfolgen sollte, kann der konstruktive Aufbau des Temperatur-Erfassungsschichtkörpers verglichen mit jenem des Reaktionsschichtkörpers erheblich vereinfacht werden. Daher kann ganz allgemein vorgesehen sein, dass der Reaktionsschichtkörper wenigstens abschnittsweise hinsichtlich Schichtmaterial oder/und Schichtfolge oder/und Schichtdicke einen anderen Schichtaufbau aufweist als der Temperatur-Erfassungsschichtkörper.

Beispielsweise kann vorgesehen sein, dass beide Schichtkörper: Reaktionsschichtkörper und Temperatur-Erfassungsschichtkörper eine einheitliche Substratlage aufweisen, auf der unterschiedliche funktionale Schichten aufgetragen sind, etwa einmal wenigstens eine luminophorhaltige Schicht und ein weiteres Mal eine zur Temperaturerfassung durch Erfassung von Infrarot-Strahlung bestimmte Schicht.

Es kann jedoch auch aus Gründen der bestmöglichen Funktionserfüllung der beiden Schichtkörper daran gedacht sein, dass diese vollständig verschieden aufgebaut sind und hinsichtlich wenigstens eines der oben genannten Schichtparameter einen vollständig unterschiedlichen Schichtaufbau aufweisen.

Für ein möglichst aussagekräftiges, genaues Erfassungsergebnis des Sauerstoffgehalts im zu erfassenden Fluid (Messobjekt-Fluid) ist es vorteilhaft, wenn die Erfassung der von der Schichtbauteilanordnung ausgehenden Strahlung das zu erfassende Fluid nicht stört und umgekehrt. Zu diesem Zweck ist gemäß einer vorteilhaften Weiterbildung der vorliegenden Erfindung vorgesehen, dass der Reaktionsschichtkörper und der Temperatur-Erfassungsschichtkörper jeweils eine Fluidkontaktseite aufweisen, auf welcher der jeweilige Schichtkörper zum Kontakt mit dem Messobjekt-Fluid ausgebildet ist, und eine der Fluidkontaktseite entgegengesetzte Erfassungsseite aufweisen, welche zum Zusammenwirken mit Strahlungsdetektoren ausgebildet ist.

Die berührungslose optische Sensierung der hier diskutierten Schichtbauteilanordnung ist nicht nur wegen des durch die Berührungslosigkeit verminderten Risikos einer Störung der zu erfassenden Vorgänge durch die hierfür verwendete Messtechnik selbst bevorzugt. Eine Kontakt-Temperaturerfassung der Temperatur des Reaktionsschichtkörpers mittels Messfühlern und dergleichen ist auch deshalb schwierig bis unmöglich, da die meisten Messfühler, die ausreichend standfest und robust sind, Temperaturen und Temperaturänderungen zu langsam erfassen und damit bei sich ändernden Temperaturen eine Temperatur anzeigen würden, die nicht die wirkliche Temperatur ist, die der Reaktionsschichtkörper zum Zeitpunkt einer erfassten Abstrahlung aufweist.

Temperaturmessfühler, die Temperaturänderungen schnell genug erfassen können, haben sich dagegen als zu fehleranfällig und zu wenig robust erwiesen, als dass diese in einem sicherheitskritischen Einsatzbereich, wie beispielsweise der Erfassung von Sauerstoffkonzentrationen eines Beatmungsgases während einer künstlichen Beatmung, zum Einsatz kommen könnten.

Da es folglich darauf ankommt, dass der Temperatur-Erfassungsschichtkörper dann, wenn er die oben genannte Erfassungsseite und Fluidkontaktseite aufweist, eine Temperaturänderung auf der Fluidkontaktseite möglichst schnell zur Erfassungsseite weiterleitet, ist es vorteilhaft, wenn der Temperatur-Erfassungsschichtkörper eine Schicht aus möglichst gut wärmeleitendem Material aufweist, die überdies dünn ausgebildet sein kann. Hierzu kann konkret vorgesehen sein, dass der Temperatur-Erfassungsschichtkörper eine Metallfolie aufweist.

Die Metallfolie kann grundsätzlich eine beliebige Metallfolie sein, beispielsweise eine Kupferfolie, die allerdings gerade in sauerstoffhaltiger Umgebung oxidationsanfällig ist und mit zunehmender Oxidation ihre Eigenschaften ändert. Bevorzugt wird daher als Metallfolie eine Aluminiumfolie vorgeschlagen, die sich selbst passiviert und daher über lange Zeit gleiche Materialeigenschaften bereitstellen kann. Außerdem kann eine Aluminiumfolie, wie andere Metallfolien auch, mit ausreichender Festigkeit selbst bei geringer Foliendicke von weniger als 15 µm ausgebildet werden. Bevorzugt weist eine Metallfolie, insbesondere die genannte Aluminiumfolie, als Teil des Temperatur-Erfassungsschichtkörpers oder als dieser Schichtkörper eine Dicke im Bereich von 6 bis 12 µm, bevorzugt im Bereich von 8 bis 11 µm auf. Durch die von Metall, insbesondere Aluminium, bereitgestellte hohe Wärmeleitfähigkeit wird Wärme schnell durch das Material hindurchgeleitet. Durch die geringe Materialdicke von unter 15 µm ist außerdem der Wärmeleitweg kurz, so dass eine sich auf der Fluidkontaktseite ändernde Temperatur im Bereich weniger Millisekunden an der Erfassungsseite erfassbar ist.

Der Reaktionsschichtkörper kann dagegen als an sich bekannter Reaktionsschichtkörper aufgebaut sein und beispielsweise eine poröse, Sauerstoffmoleküle durchlässige Substratlage aus Polyvinylidenfluorid aufweisen. Es sind jedoch vorliegend beliebige bekannte Reaktionsschichtkörper an der hier diskutierten Schichtbauteilanordnung einsetzbar.

Um weiter sicherstellen zu können, dass eine sich fluidseitig ändernde Temperatur möglichst schnell an der Erfassungsseite des Temperatur-Erfassungsschichtkörpers erfassbar wird, ist gemäß einer Weiterbildung der Erfindung vorgesehen, dass eine Außenfläche der Metallfolie die Fluidkontaktseite des Temperatur-Erfassungsschichtkörpers bildet.

Bevorzugt ist wenigstens ein Schichtkörper aus Reaktionsschichtkörper und Temperatur-Erfassungsschichtkörper eben. Besonders bevorzugt sind beide Schichtkörper eben, um eine etwaige Strömung des Fluids, dessen Sauerstoffgehalt erfasst werden soll, möglichst nicht zu stören. Wird der wenigstens eine Schichtkörper aus Reaktionsschichtkörper und Temperatur-Erfassungsschichtkörper zur Erfassung des Sauerstoffgehalts eines strömenden Fluids eingesetzt, dann kann der wenigstens eine Schichtkörper, vorzugsweise beide Schichtkörper, zur möglichst geringen Störung der Messobjekt-Fluidströmung um eine zur Strömungsrichtung des Fluids am Anbringungsort des wenigstens einen Schichtkörpers parallele Krümmungsachse gekrümmt sein. Bevorzugt ist der wenigstens eine Schichtkörper nur um diese Krümmungsachse gekrümmt.

Die Schichtkörper können adhäsiv mit dem Gehäuse verbunden sein, beispielsweise durch eine Klebstoffspur, welche auf der Erfassungsseite der Schichtbauteilanordnung aufgetragen jeweils einen für eine Strahlungserfassung vorgesehenen Bereich der Erfassungsseite des jeweiligen Schichtkörpers ausspart. Dadurch wird die Strahlungsemission des wenigstens einen Schichtkörpers und ihre Erfassung durch den Klebstoff nicht gestört.

Alternativ oder zusätzlich kann ein oder können beide Schichtkörper über ein Klebeband mit dem Gehäuse verbunden sein, wobei das Klebeband unter Aussparung eines Bereichs der jeweiligen Fluidkontaktseiten teilweise mit der Fluidkontaktseite und teilweise mit dem Gehäuse adhäsiv verbunden ist. Somit wird der Kontakt des wenigstens einen Schichtkörpers mit dem Fluid durch das Klebeband nicht gestört.

Ganz grundsätzlich kann der Temperatur-Erfassungsschichtkörper eine Substratlage aufweisen, welche eine funktionale Schicht trägt. Hierauf wurde oben bereits hingewiesen. Die Substratlage kann beispielsweise die oben genannte Metallfolie sein, die ausreichend stabil bei geringer Dicke bereitgestellt werden kann. Auf der Erfassungsseite kann der Temperatur-Erfassungsschichtkörper eine mittelbar, also unter Zwischenanordnung weiterer Schichten, oder unmittelbar von der Substratlage getragene Emissionsschicht mit einem Emissionsgrad von nicht weniger als 0,75 aufweisen.

Noch besser weist die Emissionsschicht einen Emissionsgrad von nicht weniger als 0,9 auf. Je höher der Emissionsgrad ist, desto besser kann störende Reflektion auf der Erfassungsseite des Temperatur-Erfassungsschichtkörpers vermieden werden. Umso sicherer ist es, dass der Temperatur-Erfassungsschichtkörper tatsächlich die Quelle der in der Nähe seiner Erfassungsseite erfassten Infrarot-Strahlung ist und letztere nicht lediglich an der Oberfläche der Erfassungsseite zum entsprechenden Detektor hin reflektiert wurde.

Ganz grundsätzlich soll nicht ausgeschlossen sein, dass die Emissionsschicht und die Substratlage materialidentisch sind und die Emissionsschicht auf der Erfassungsseite durch mechanisches oder/und chemisches Aufrauen der Oberfläche der Substratlage auf der Erfassungsseite gebildet ist. Dies kommt insbesondere bei Substratlagen mit materialimmanent hohem Emissionsgrad von mehr als 0,75 in Betracht.

Da die als Substratlage bevorzugte Metallfolie häufig unerwünscht stark reflektierende Oberflächen aufweisen wird, kann jedoch eine gesonderte Emissionsschicht auf der Substratlage von Vorteil sein. Um ein möglichst vorteilhaftes Emissionsverhalten im infraroten Wellenlängenbereich erhalten zu können, ist es vorteilhaft, wenn die Emissionsschicht Farbpigmente enthält. Dabei spielt die Farbe der Farbpigmente nur eine untergeordnete Rolle, da im infraroten Wellenlängenbereich viele Farbpigmente "schwarz" sind und somit einen ausreichend hohen Emissionsgrad bereitstellen. Dennoch ist die Verwendung von anthrazitfarbenen bis schwarzen Farbpigmenten bevorzugt.

In Versuchen hat sich eine karbon-haltige Schicht als Emissionsschicht bewährt. Beispielsweise kann die Emissionsschicht als karbon-haltiger Lack aufgetragen sein. Als geeignet hat sich beispielsweise ein karbon-haltiger Leitlack der Firma Peters GmbH & Co. KG in Kempen (DE) mit der Bezeichnung "SD 2843 HAL" erwiesen.

Ebenso kann ein Epoxid die Emissonsschicht bilden. Auch Epoxide sind in dünner Schichtdicke auf ein Substrat auftragbar, beispielsweise drucktechnisch oder durch Aufsprühen. Sie bilden nach dem Aushärten eine vorteilhaft feste, robuste Oberfläche. Mögliche vorteilhafte Epoxide zur Bildung einer Emissionsschicht sind unter der Produktbezeichnung EP 601 oder EP 653 mit der USP-Klasse VI von der Firma Polytec PT GmbH in Waldbronn (DE) erhältlich. Bevorzugt sollten diese Epoxide mit Farbpigmenten gefüllt verwendet werden, aus den genannten obigen Gründen bevorzugt wiederum mit schwarzen Farbpigmenten.

Da die vorliegend diskutierte Schichtbauteilanordnung zur Erfassung unmittelbar eines Sauerstoffpartialdrucks eines Fluids und daraus abgeleitet des Sauerstoffgehalts des Fluids geeignet und bestimmt ist, betrifft die vorliegende Erfindung auch eine Reaktionsbaugruppe, umfassend ein Gehäuse und eine im Gehäuse vorgesehene Schichtbauteilanordnung, wie sie oben beschrieben und weitergebildet ist, wobei das Gehäuse eine Öffnung aufweist, durch welche hindurch ein Fluid in das Gehäuse einleitbar ist, wobei das Gehäuse ein Reaktionsfenster aufweist, durch welches hindurch der Reaktionsschichtkörper von der ersten elektromagnetischen Strahlung erreichbar und welches von der zweiten elektromagnetischen Strahlung durchdringbar ist, und wobei das Gehäuse ein vom Reaktionsfenster räumlich entfernt angeordnetes Temperatur-Erfassungsfenster aufweist, welches von der vom Temperatur-Erfassungsschichtkörper abgestrahlten Infrarotstrahlung durchdringbar ist.

In das Gehäuse ist das Messobjekt-Fluid, dessen Sauerstoffpartialdruck erfasst werden soll, zur Erfassung einleitbar. Mit den gesondert voneinander und räumlich entfernt voneinander ausgebildeten Fenstern: Reaktionsfenster und Temperatur-Erfassungsfenster, kann die von dem jeweiligen Schichtkörper: Reaktionsschichtkörper und Temperatur-Erfassungsschichtkörper, ausgehende elektromagnetische Strahlung an räumlich voneinander entfernt gelegenen Orten erfasst werden, so dass die involvierten elektromagnetischen Strahlungen sich nicht gegenseitig stören können.

Zur möglichst optimalen Ausrüstung des Gehäuses für eine Erfassung der einmal vom Reaktionsschichtkörper und ein weiteres Mal vom Temperatur-Erfassungsschichtkörper ausgehenden elektromagnetischen Strahlung kann das Reaktionsfenster konstruktiv vom Temperatur-Erfassungsfenster verschieden ausgebildet sein.

Die konstruktiv unterschiedliche Ausbildung kann zum einen in einer unterschiedlichen Materialwahl zum Ausdruck kommen. Alternativ oder zusätzlich kann vorgesehen sein, dass das Reaktionsfenster dicker ist als das Temperatur-Erfassungsfenster. Dabei soll eine Dicke des Temperatur-Erfassungsfensters von Null ausdrücklich eingeschlossen sein. Eine ausreichend dicke Ausbildung des Reaktionsfensters ist auch deshalb vorteilhaft, da das Reaktionsfenster nicht nur einen Durchgang der ersten und der zweiten elektromagnetischen Strahlung ermöglichen muss, sondern auch den Reaktionsschichtkörper von der Erfassungsseite her gegen einen Kontakt mit Sauerstoff abschirmen soll, der nicht von dem Messobjekt-Fluid stammt.

Durch eine dünnere Ausbildung des Temperatur-Erfassungsfensters kann dann, wenn kein optimal für Infrarot-Strahlung durchlässiges Material verfügbar ist, das weniger optimale Material wenigstens so dünn ausgebildet werden, dass es möglichst wenig Störeinfluss aufweist.

Die Wahl eines infrarot-strahlungsdurchlässigen Materials kann jedoch entfallen, wenn man auf die oben bereits angedeutete Lösung eines Temperatur-Erfassungsfensters mit einer Dicke von Null zurückgreift. Dementsprechend ist gemäß einer besonders bevorzugten Weiterbildung der vorliegenden Erfindung vorgesehen, dass das Reaktionsfenster ein für Licht im optisch wahrnehmbaren Wellenlängenbereich transparentes Material aufweist und dass das Temperatur-Erfassungsfenster ein das Gehäuse in dessen Dickenrichtung durchsetzendes Loch umfasst, das durch den Temperatur-Erfassungsschichtkörper bedeckt ist.

Besonders dann, wenn der Temperatur-Erfassungsschichtkörper die oben bevorzugt genannte Metallfolie aufweist, kann das eine Gehäusewand als Temperatur-Erfassungsfenster durchsetzende Loch sicher und dauerhaft mit dem Temperatur-Erfassungsschichtkörper bedeckt sein. Die Erfassungsseite des Temperatur-Erfassungsschichtkörpers liegt dann bevorzugt für eine etwaig vorgesehene Infrarot-Detektoranordnung in dem Loch frei.

Das als Temperatur-Erfassungsfenster das Gehäuse durchsetzende Loch weist bevorzugt mit zunehmender Annäherung von der vom Temperatur-Erfassungsschichtkörper weg weisenden Gehäuseseite zu der dem Temperatur-Erfassungsschichtkörper nächstgelegenen Gehäuseseite eine zunehmende Lochquerschnittsfläche auf. Bevorzugt ist das Loch negativ konisch sich zum Temperatur-Erfassungsschichtkörper öffnend ausgebildet, so dass es wenigstens näherungsweise einem Erfassungskegel eines Infrarot-Detektors zur Erfassung von vom Temperatur-Erfassungsschichtkörper ausgehender Infrarot-Strahlung entsprechen kann.

Zur Vermeidung von äußeren Störeinflüssen kann die das Loch zwischen Gehäuseaußen- und Gehäuseinnenseite begrenzende Gehäusefläche beschichtet, insbesondere verspiegelt sein. Damit kann ausgeschlossen werden, dass ein aus transparentem Material gebildetes Gehäuse als optischer Leiter wirkt und elektromagnetische Strahlung zum Temperatur-Erfassungsfenster leitet, die nicht als Infrarot-Strahlung vom Temperatur-Erfassungsschichtkörper ausgeht.

Grundsätzlich kann das Gehäuse becherartig, also mit nur einer Öffnung ausgebildet sein, durch die Messobjekt-Fluid eingeleitet und wieder ausgeleitet werden kann. Ein derartiges Gehäuse kann beispielsweise zur Bestimmung eines Sauerstoff-Partialdrucks von in Flüssigkeit gelöstem Sauerstoff verwendet werden. Zur Verwendung in einer Beatmungsvorrichtung ist jedoch ein Gehäuse vorteilhaft, welches von dem Messobjekt-Fluid durchströmbar ist. Daher ist es bevorzugt, dass das Gehäuse eine von der Öffnung verschiedene und entfernt von dieser gelegene weitere Öffnung derart aufweist, dass das Gehäuse zwischen der Öffnung und der weiteren Öffnung von Fluid durchströmbar ist.

Somit ist grundsätzlich möglich, die Reaktionsbaugruppe vorteilhaft in einer Beatmungsvorrichtung im Haupt-Beatmungsgasstrom anzuordnen. Eine bevorzugt kompakte Reaktionsbaugruppe kann dabei dadurch erhalten werden, dass die Schichtbauteilanordnung zwischen der Öffnung und der weiteren Öffnung vorgesehen ist.

Bevorzugt ist das Gehäuse geradlinig durchströmbar, um Verwirbelungen des zu erfassenden Fluids beim Durchgang durch das Gehäuse und somit beim Vorbeigang an der Schichtbauteilanordnung möglichst zu vermeiden.

Zur Realisierung der besonders vorteilhaften Anwendung der vorstehend diskutierten Reaktionsbaugruppe in einer Beatmungsvorrichtung ist gemäß einer vorteilhaften Weiterbildung der vorliegenden Erfindung vorgesehen, dass die Reaktionsbaugruppe zur Anordnung in einer Beatmungsleitungsanordnung einer Beatmungsvorrichtung ausgebildet ist, wobei die Reaktionsbaugruppe im Bereich sowohl der Öffnung als auch der weiteren Öffnung je eine Anschlussformation zur Verbindung mit je einem Abschnitt der Beatmungsleitungsanordnung ausgebildet ist.

Vorteilhafterweise ist die Reaktionsbaugruppe als Sauerstoff-Messküvette ausgebildet. Eine derartige Messküvette weist in der Regel wenigstens einen als Parallelepiped gestalteten Gehäuseabschnitt auf. Bevorzugt ist die Reaktionsbaugruppe in einem solchen Parallelepiped-Abschnitt des Gehäuses angeordnet, wobei eine, vorzugsweise ebene oder um nur eine Krümmungsachse gekrümmte, Fläche des Parallelepiped-Abschnitts des Gehäuses bevorzugt sowohl das Reaktionsfenster als auch das Temperatur-Erfassungsfenster aufweist.

Da die beschriebene Reaktionsbaugruppe der sensorischen Erfassung des Sauerstoffpartialdrucks und daraus abgeleiteten Sauerstoffgehalts eines Fluids dient, betrifft die vorliegende Anmeldung weiter eine Sensoranordnung, umfassend eine Reaktionsbaugruppe, wie sie oben beschrieben und weitergebildet wurde, und weiter umfassend eine Detektorbaugruppe, mit
- einer Strahlungsquelle, welche zur Abstrahlung der ersten elektromagnetischen Strahlung durch das Reaktionsfenster ausgebildet ist,
- einem Strahlungsdetektor, welcher zur Erfassung der zweiten elektromagnetischen Strahlung durch das Reaktionsfenster ausgebildet ist, und
- einem Infrarot-Detektor, welcher zur Erfassung der vom Temperatur-Erfassungsschichtkörper abgestrahlten Infrarot-Strahlung durch das Temperatur-Erfassungsfenster ausgebildet ist.

Bevorzugt sind der Infrarot-Detektor und die Strahlungsquelle in voneinander bezüglich der ersten elektromagnetischen Strahlung und der Infrarot-Strahlung abgeschirmten Messräumen angeordnet, um eine wechselseitige strahlungsbedingte Störung möglichst zu vermeiden.

Wenngleich bei der Anwendung der Sensoranordnung bevorzugt an eine Anwendung in einer Beatmungsvorrichtung oder im Zusammenwirken mit dieser gedacht ist, sei darauf hingewiesen, dass die Sensoranordnung dazu grundsätzlich ausgebildet ist, beliebige Sauerstoffpartialdrücke von in einem Fluid gelösten Sauerstoff zu erfassen. Bevorzugt ist das Fluid jedoch Beatmungsgas.

Um einen hohen Grad an Bauteilhygiene bei der unmittelbar mit dem Fluid in Kontakt kommenden Reaktionsbaugruppe sicherstellen zu können, ist es - wie oben bereits erwähnt - vorteilhaft, wenn die Detektorbaugruppe lösbar mit der Reaktionsbaugruppe verbindbar oder verbunden ist. Die wesentlich teurere Detektorbaugruppe kann somit zeitlich nacheinander mit mehreren Reaktionsbaugruppen zur Erfassung von Sauerstoffgehalten in Fluiden verwendet werden.

Bevorzugt handelt es sich daher bei der oben genannten Reaktionsbaugruppe um eine Einweg- bzw. Wegwerf-Reaktionsbaugruppe, welche etwa im klinischen Betrieb nach einmaligem Gebrauch an einem Patienten entsorgt werden kann. Um möglichst einfach und sicher, insbesondere verwechslungssicher, eine wiederverwendbare Detektorbaugruppe mit der Reaktionsbaugruppe, insbesondere mit der als Sauerstoff-Messküvette ausgebildeten Reaktionsbaugruppe, lösbar zu verbinden, ist die Ausbildung des Parallelepiped-Abschnitts als quaderförmiger Abschnitt bevorzugt. Vorteilhaft kann der quaderförmige Abschnitt Mantelseitenflächenpaare unterschiedlicher Breite aufweisen, um eine fehlerhafte Anbringung der Detektorbaugruppe an dem Gehäuse, insbesondere an der Messküvette zu vermeiden.

Wie eingangs im Zusammenhang mit der Schichtbauteilanordnung erläutert wurde, kann eine Kalibration der berührungslosen, infrarotbasierten Temperaturerfassung des Temperatur-Erfassungsschichtkörpers mit der eigentlich interessierenden Temperatur des Reaktionsschichtkörpers erforderlich oder wenigstens vorteilhaft sein, um ein möglichst genaues luminophorbasiertes Erfassungsergebnis des Sauerstoffgehalts in dem Messobjekt-Fluid zu erhalten. Zu diesem Zweck kann vorgesehen sein, dass die Sensoranordnung mit einer elektronischen Auswertevorrichtung signalübertragungsmäßig verbunden ist, die wenigstens einen Datenspeicher und einen mit dem Datenspeicher in Datenaustauschverbindung stehenden Datenverarbeitungsprozessor aufweist, wobei im Datenspeicher Kalibrationsinformation zur Korrelation von erfasster Infrarotstrahlung des Temperatur-Erfassungsschichtkörpers und Temperatur des Luminophors hinterlegt ist.

Der Temperatur des Luminophors steht die Temperatur des Reaktionsschichtkörpers gleich, wobei insbesondere die Temperatur der Erfassungsseite des Reaktionsschichtkörpers interessiert.

Die Kalibration kann vorab für die konkrete Schichtbauteilanordnung bzw. für die konkrete Reaktionsbaugruppe oder für eine Klasse von Schichtbaukörpern bzw. Reaktionsbaugruppen im Labor erfolgen. Hierzu können die beiden Schichtbaukörper nacheinander auf thermische Gleichgewichtszustände jeweils unterschiedlicher, aber einheitlicher und bekannter Temperatur gebracht werden. Dann kann für jeden Gleichgewichtszustand der Erfassungswert der vom Temperatur-Erfassungsschichtkörper abgestrahlten Infrarot-Strahlung mit der jeweiligen bekannten Gleichgewichtstemperatur des Reaktionsschichtkörpers verknüpft werden.

Um zu überprüfen, dass der Temperatur-Erfassungsschichtkörper einer Temperaturänderung des Reaktionsschichtkörpers ausreichend schnell folgt, können die beiden Fluidkontaktseiten mit einer Temperaturquelle bekannter, sich mit der Zeit in bekannter Weise ändernden Temperatur in Kontakt gebracht werden und können die Temperaturen der Erfassungsseiten beider Schichtkörper als Funktion der Zeit berührungslos erfasst werden.

Aus den so gewonnenen Daten kann eine hochgenaue Kalibrationsbeziehung zwischen einer berührungslos an der Erfassungsseite des Temperatur-Erfassungsschichtkörpers erfassten Temperatur und der Temperatur der Erfassungsseite des Reaktionsschichtkörpers und damit der Temperatur des darin vorhandenen Luminophors erhalten werden.

Weiterhin kann die elektronische Auswertevorrichtung Kalibrationsinformation zur Korrelation von vom Strahlungsdetektor erfasster zweiter elektromagnetischer Strahlung mit einem Sauerstoffkonzentrationswert oder Sauerstoffgehaltswert des Messobjekt-Fluids enthalten. Wie eingangs geschildert, steht die vom Strahlungsdetektor erfasste zweite elektromagnetische Strahlung bzw. ihre zeitliche oder/und intensitätsmäßige Beziehung zur anregenden ersten elektromagnetischen Strahlung in unmittelbarem Zusammenhang mit dem Partialdruck des Sauerstoffs im Messobjekt-Fluid. Allerdings kann ohne weiteres aus dem erfassten Partialdruck die Sauerstoffkonzentration bzw. der Sauerstoffgehalt des Fluids ermittelt bzw. errechnet werden.

Da der bevorzugte Anwendungsfall der zuvor beschriebenen Sensoranordnung ihr Zusammenwirken mit einer Beatmungsvorrichtung zur künstlichen Beatmung ist, ist eine Beatmungsvorrichtung zur künstlichen Beatmung offenbart mit
- einer Beatmungsgasquelle,
- einer zwischen der Beatmungsgasquelle und einem patientenseitigen, proximalen Ende verlaufenden Beatmungsleitungsanordnung,
- einer Ventilanordnung, umfassend ein Inspirationsventil und ein Exspirationsventil,
- einer Durchflusssensoranordnung zur quantitativen Erfassung eines Gasflusses in der Beatmungsleitungsanordnung,
- einer Druckveränderungsanordnung zur Veränderung des Gasdrucks des in der Beatmungsleitungsanordnung strömenden Gases, und mit
- einer Steuereinrichtung welche wenigstens dazu ausgebildet ist, den Betrieb der Druckveränderungsanordnung auf Grundlage von Messsignalen des proximalen Durchflusssensors zu steuern, und
- einer Sensoranordnung, wie sie oben vorgestellt und vorteilhaft weitergebildet wurde, zur Ermittlung eines Sauerstoffgehalts von in der Beatmungsleitungsanordnung strömendem Gas.

Mit "Beatmungsgasquelle" ist ganz allgemein jede Art von Beatmungsgasquelle gemeint, die dazu dient, Beatmungsgas in die Beatmungsleitungsanordnung einzuleiten. Dies kann eine Anschlussformation der Beatmungsvorrichtung sein, welche zur Verbindung mit einem austauschbaren oder gebäudeseitig fest installierten Beatmungsgasvorrat ausgebildet ist. Dies kann auch eine Pumpe sein, welche in der Beatmungsgasvorrichtung Beatmungsgas aus einem Vorrat, der auch die Außenumgebung sein kann, ansaugt und in die Beatmungsleitungsanordnung einleitet. Eine solche Pumpe kann auch als Gebläse ausgestaltet sein.

Als "Druckveränderungsanordnung" ist jede Vorrichtung zu verstehen, welche dazu geeignet und bestimmt ist, den Druck des in der Beatmungsleitungsanordnung strömenden Beatmungsgases zu verändern. Dies kann dann, wenn die Beatmungsgasquelle lediglich eine Anschlussformation zum Anschluss an einen gebäudeseitig installierten Gasvorrat ist, eine Ventilanordnung zur Druckminderung sein. Die Druckveränderungsanordnung kann dann, wenn die Beatmungsgasquelle die oben genannte Pumpe bzw. das Gebläse aufweist, Teile oder die Gesamtheit der von der Steuereinrichtung in ihrer Leistung veränderlichen Beatmungsgasquelle, etwa die Pumpe oder das Gebläse, selbst umfassen oder sogar sein. Auch dann, wenn die Beatmungsgasquelle durch die oben genannte Pumpe oder das Gebläse gebildet ist, kann die Druckveränderungsanordnung zusätzlich zur Beatmungsgasquelle selbst ein Druckminderungsventil umfassen oder kann ausschließlich durch ein Druckminderungsventil gebildet sein, etwa wenn die Pumpe oder das Gebläse mit konstanter Last läuft.

Die Steuervorrichtung umfasst bevorzugt die oben genannte elektronische Auswertevorrichtung der Sensoranordnung oder ist diese.

Bevorzugt ist die Sensoranordnung in Beatmungsgas-Hauptstrom angeordnet, so dass sie unmittelbar wenigstens einen Strom aus exspiratorischem und inspiratorischem Beatmungsgasstrom erfassen kann. Bevorzugt ist die Sensoranordnung derart in der Beatmungsleitungsanordnung vorgesehen, dass sie sowohl exspiratorischen als auch inspiratorischen Beatmungsgasstrom erfassen kann. Hierzu kann die Sensoranordnung patientennah, also proximal, angeordnet sein, bevorzugt zwischen einer Y-Verbindung, mit welcher gesonderte exspiratorische und inspiratorische Beatmungsleitungsabschnitte in Richtung zum Patienten hin zusammengeführt werden, und einem endotrachealen Rohr am Patienten.

Weiter bevorzugt ist die Sensoranordnung angeordnet zwischen der Stelle der Zusammenführung von gesonderten exspiratorischen und inspiratorischen Beatmungsleitungsabschnitten in Richtung zum Patienten hin und dem Durchflusssensor. Die vorliegende Erfindung wird nachfolgend anhand der beiliegenden Zeichnungen näher erläutert werden. Es stellt dar:
- Fig. 1: einen bevorzugten und dennoch nur beispielhaften Anwendungsfall der Schichtbauteilanordnung, Reaktionsbaugruppe und Sensoranordnung gemäß der vorliegenden Erfindung in einer Beatmungsvorrichtung,
- Fig. 2A: eine grobschematische Draufsicht auf eine erfindungsgemäße flächige Schichtbauteilanordnung der vorliegenden Erfindung,
- Fig. 2B: eine Schnittansicht durch die Schichtbauteilanordnung von Fig. 2A längs der Schnittebene IIB-IIB von Fig. 2A,
- Fig. 3A: eine Draufsicht auf eine Baugruppe, umfassend die Schichtbauteilanordnung der Fig. 2A und 2B und ein Fensterbauteil eines die Schichtbauteilanordnung aufnehmenden Gehäuses einer Reaktionsbaugruppe,
- Fig. 3B: eine Schnittansicht durch die Baugruppe von Fig. 3A längs der Schnittebene IIIB-IIIB von Fig. 3A,
- Fig. 4: eine erfindungsgemäße Reaktionsbaugruppe der vorliegenden Erfindung und
- Fig. 5: eine grobschematische Querschnittsansicht durch eine erfindungsgemäße Sensoranordnung mit der Reaktionsbaugruppe von Fig. 4, wie sie als Sensoranordnung an der Beatmungsvorrichtung von Fig. 1 zur Anwendung kommt.

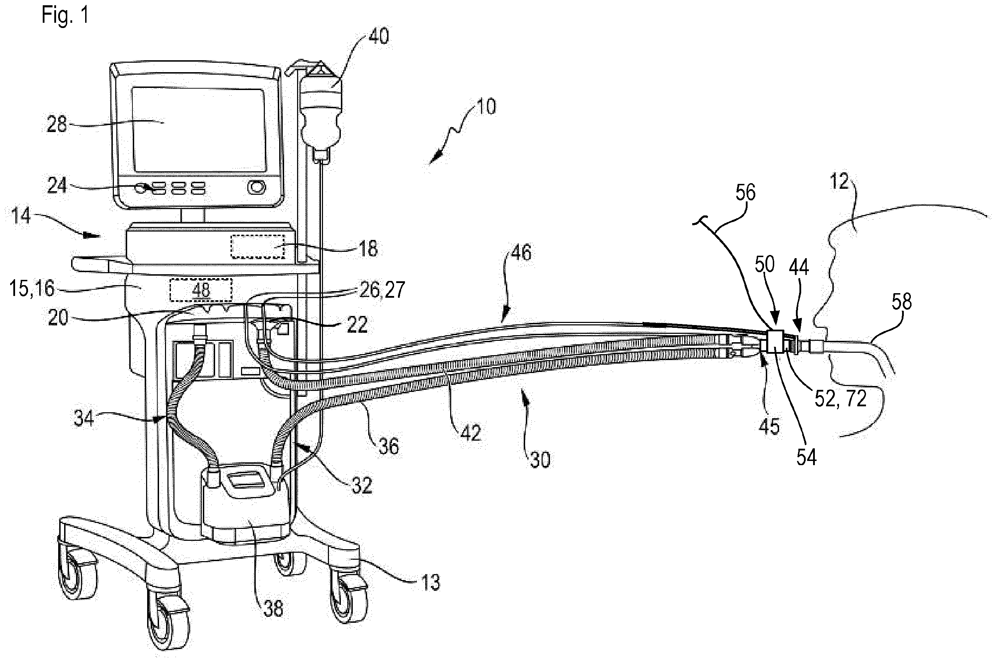

Zur Erläuterung des bevorzugten Anwendungsbereichs der in der vorliegenden Anmeldung diskutierten Gegenstände: Schichtbauteilanordnung, Reaktionsbaugruppe, Sensoranordnung und Beatmungsvorrichtung, sei zunächst eine die genannten Bauteile verwendende Beatmungsvorrichtung im Zusammenhang mit Fig. 1 erläutert:
In Figur 1 ist eine Ausführungsform einer Beatmungsvorrichtung allgemein mit 10 bezeichnet. Die Beatmungsvorrichtung 10 dient im dargestellten Beispiel zur künstlichen Beatmung eines humanen Patienten 12.

Die Beatmungsvorrichtung 10 kann als mobile Beatmungsvorrichtung 10 auf einem rollbaren Gestell 13 aufgenommen sein.

Die Beatmungsvorrichtung 10 weist ein Gehäuse 14 auf, in dem - von außen wegen des blickdichten Gehäusematerials nicht erkennbar - eine Druckveränderungsanordnung 16 und eine Steuereinrichtung 18 aufgenommen sein können.

Die Druckveränderungsanordnung 16 ist in an sich bekannter Weise aufgebaut und weist eine Beatmungsgasquelle 15 in Gestalt einer Pumpe, eines Verdichters oder eines Gebläses auf, die jeweils lastveränderlich ansteuerbar sind und daher nicht nur der Einleitung von Beatmungsgas in die Beatmungsvorrichtung, sondern auch der Änderung des Drucks des eingeleiteten Beatmungsgases dienen. Die Beatmungsgasquelle 15 kann alternativ auch durch einen Druckbehälter gebildet sein, welcher an das Gehäuse 14 der Beatmungsvorrichtung 10 anschließbar ist. Die Druckveränderungsanordnung 16 kann die Beatmungsgasquelle 15 und gegebenenfalls zusätzlich - oder im Falle eines unter Druck stehenden Gasvorrats als Beatmungsgasquelle alternativ - ein Reduzierventil und dergleichen aufweisen. Weiter weist die Beatmungsvorrichtung 10 in an sich bekannter Weise ein Inspirationsventil 20 und ein Exspirationsventil 22 auf.

Die Steuereinrichtung 18 ist üblicherweise als Computer oder Mikroprozessor realisiert. Sie umfasst eine in Figur 1 nicht dargestellte Datenspeichereinrichtung, um für den Betrieb der Beatmungsvorrichtung 10 notwendige Daten speichern und erforderlichenfalls aufrufen zu können. Die Speichereinrichtung kann bei Netzwerkbetrieb auch außerhalb des Gehäuses 14 gelegen und durch eine Datenübertragungsverbindung mit der Steuereinrichtung 18 verbunden sein. Die Datenübertragungsverbindung kann durch eine Kabel- oder eine Funkstrecke gebildet sein. Um jedoch zu verhindern, dass Störungen der Datenübertragungsverbindung sich auf den Betrieb der Beatmungsvorrichtung 10 auswirken können, ist die Speichereinrichtung bevorzugt in die Steuereinrichtung 18 integriert oder wenigstens im selben Gehäuse 14 wie diese aufgenommen.

Zur Eingabe von Daten in die Beatmungsvorrichtung 10 bzw. genauer in die Steuereinrichtung 18 weist die Beatmungsvorrichtung 10 einen Dateneingang 24 auf, welcher in dem in Figur 1 dargestellten Beispiel durch eine Tastatur repräsentiert ist. Die Steuereinrichtung 18 kann alternativ oder zusätzlich zur dargestellten Tastatur Daten über verschiedene Dateneingänge erhalten, etwa über eine Netzwerkleitung, eine Funkstrecke oder über Sensoranschlüsse 26, auf die weiter unten im Einzelnen eingegangen wird.

Zur Ausgabe von Daten an den behandelnden Therapeuten kann die Beatmungsvorrichtung 10 ein Ausgabegerät 28 aufweisen, im dargestellten Beispiel einen Bildschirm.

Zur künstlichen Beatmung ist der Patient 12 mit der Beatmungsvorrichtung 10, genauer mit der Druckveränderungsanordnung 16 im Gehäuse 14, über eine Beatmungsleitungsanordnung 30 verbunden. Der Patient 12 ist hierfür mit einem endotrachealen Rohr 58 intubiert.

Die Beatmungsleitungsanordnung 30, über welche frisches Beatmungsgas von der Beatmungsgasquelle 15 und der Druckveränderungsanordnung 16 in die Lunge des Patienten 12 geleitet werden kann, weist außerhalb des Gehäuses 14 einen Inspirationsschlauch 32 auf. Der Inspirationsschlauch 32 kann unterbrochen sein und einen ersten Inspirationsteilschlauch 34 und einen zweiten Inspirationsteilschlauch 36 aufweisen, zwischen welchen eine Konditionierungseinrichtung 38 zur gezielten Befeuchtung und gegebenenfalls auch Temperierung des dem Patienten 12 zugeführten frischen Beatmungsgases vorgesehen sein kann. Die Konditionierungseinrichtung 38 kann mit einem externen Flüssigkeitsvorrat 40 verbunden sein, über den Wasser zur Befeuchtung oder auch ein Medikament, etwa zur Entzündungshemmung oder zur Erweiterung der Atemwege, dem Beatmungsgas zugeführt werden kann. Bei einem Einsatz der vorliegenden Beatmungsvorrichtung 10 als Anästhesie-Beatmungsvorrichtung können auf diese Weise volatile Anästhetika kontrolliert über die Beatmungsvorrichtung 10 an den Patienten 12 abgegeben werden. Die Konditionierungseinrichtung 38 sorgt dafür, dass das frische Beatmungsgas dem Patienten 12 mit einem vorbestimmten Feuchtegehalt, gegebenenfalls unter Zugabe eines Medikamenten-Aerosols, und mit einer vorbestimmten Temperatur zugeleitet wird.

Die Beatmungsleitungsanordnung 30 weist neben dem bereits erwähnten Inspirationsventil 20 das Exspirationsventil 22 und weiter einen Exspirationsschlauch 42 auf, über welchen verstoffwechseltes Beatmungsgas aus der Lunge des Patienten 12 in die Atmosphäre abgeblasen wird.

Der Inspirationsschlauch 32 ist mit dem Inspirationsventil 20 gekoppelt, der Exspirationsschlauch 42 mit dem Exspirationsventil 22. Von den beiden Ventilen ist jeweils nur eines gleichzeitig zum Durchlass einer Gasströmung geöffnet. Die Betätigungssteuerung der Ventile 20 und 22 erfolgt ebenfalls durch die Steuereinrichtung 18.

Während eines Beatmungszyklus ist zunächst für die Dauer der Inspirationsphase das Exspirationsventil 22 geschlossen und das Inspirationsventil 20 geöffnet, sodass frisches Beatmungsgas vom Gehäuse 14 zum Patienten 12 geleitet werden kann. Eine Strömung des frischen Beatmungsgases wird durch gezielte Druckerhöhung des Beatmungsgases durch die Druckveränderungsanordnung 16 bewirkt. Aufgrund der Druckerhöhung strömt das frische Beatmungsgas in die Lunge des Patienten 12 und expandiert dort den lungennahen Körperbereich, also insbesondere den Brustkorb, gegen die individuelle Elastizität der lungennahen Körperteile. Hierdurch steigt auch der Gasdruck im Inneren der Lunge des Patienten 12 an.

Am Ende der Inspirationsphase wird das Inspirationsventil 20 geschlossen und das Exspirationsventil 22 geöffnet. Es beginnt die Exspirationsphase. Aufgrund des bis zum Ende der Inspirationsphase erhöhten Gasdrucks des in der Lunge des Patienten 12 befindlichen Beatmungsgases strömt dieses nach dem Öffnen des Exspirationsventils 22 in die Atmosphäre, wobei sich mit fortschreitender Strömungsdauer der Gasdruck in der Lunge des Patienten 12 verringert. Erreicht der Gasdruck in der Lunge 12 einen an der Beatmungsvorrichtung 10 eingestellten positiven end-exspiratorischen Druck, also einen geringfügig höheren Druck als den Atmosphärendruck, wird die Exspirationsphase mit dem Schließen des Exspirationsventils 22 beendet und es schließt sich ein weiterer Beatmungszyklus an.

Während der Inspirationsphase wird dem Patienten 12 das sogenannte Beatmungs-Tidalvolumen zugeführt, also das Beatmungsgas-Volumen pro Atemhub. Das Beatmungs-Tidalvolumen multipliziert mit der Anzahl an Beatmungszyklen pro Minute, also multipliziert mit der Beatmungsfrequenz, ergibt das Minutenvolumen der vorliegend durchgeführten künstlichen Beatmung.

Bevorzugt ist die Beatmungsvorrichtung 10, insbesondere die Steuereinrichtung 18, dazu ausgebildet, Beatmungs-Betriebsparameter, die den Beatmungsbetrieb der Beatmungsvorrichtung 10 kennzeichnen, während des Beatmungsbetriebs wiederholt zu aktualisieren bzw. zu ermitteln, um sicherzustellen, dass der Beatmungsbetrieb zu jedem Zeitpunkt möglichst optimal auf den jeweils zu beatmenden Patienten 12 abgestimmt ist. Besonders vorteilhaft erfolgt die Bestimmung eines oder mehrerer Beatmungs-Betriebsparameter mit der Beatmungsfrequenz, sodass für jeden Beatmungszyklus aktuelle und damit optimal an den Patienten 12 angepasste Beatmungs-Betriebsparameter bereitgestellt werden können.

Hierzu ist die Beatmungsvorrichtung 10 mit einem oder mehreren Sensoren datenübertragungsmäßig verbunden, welche den Zustand des Patienten oder/und den Betrieb der Beatmungsvorrichtung überwachen.

Einer dieser Sensoren ist ein proximaler Durchflusssensor 44, welcher auf der dem Patienten 12 näher gelegenen Seite eines Y-Verbindungsstücks 45 angeordnet ist und dort die in der Beatmungsleitungsanordnung 30 herrschende Beatmungsgas-Strömung erfasst. Der Durchflusssensor 44 kann mittels einer Sensor-Leitungsanordnung 46 mit den Dateneingängen 26 der Steuereinrichtung 18 gekoppelt sein. Die Sensor-Leitungsanordnung 46 kann, muss jedoch nicht, elektrische Signalübertragungsleitungen umfassen. Sie kann ebenso Schlauchleitungen aufweisen, die den in Strömungsrichtung beiderseits des Durchflusssensors 44 herrschenden Gasdruck an die Dateneingänge 26 übertragen, wo diese von Drucksensoren 27 quantifiziert werden. Der Durchflusssensor 44 ist zwar bevorzugt ein nach dem Differenzdruck-Prinzip arbeitender Durchflusssensor, kann jedoch auch ein nach einem anderen physikalischen Wirkprinzip arbeitender Durchflusssensor sein.

Im Gehäuse 14 ist ein weiterer Durchflusssensor 48 vorgesehen, welcher aufgrund seiner größeren Entfernung vom Patienten 12 - verglichen mit dem proximalen Durchflusssensor 44 - als distaler Durchflusssensor 48 bezeichnet ist.

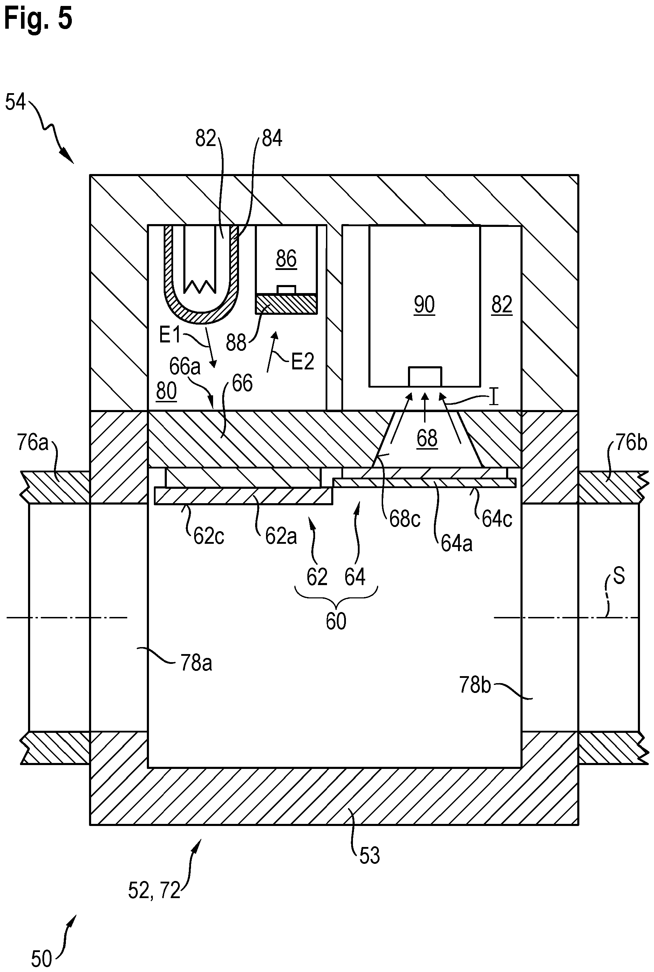

In der Beatmungsleitungsanordnung 30 zwischen dem Y-Verbindungsstück 45 und dem Durchflusssensor 44 ist eine Sensoranordnung 50, umfassend eine Reaktionsbaugruppe 72 mit einem als Messküvette 52 ausgebildeten Gehäuse 52 und eine Detektorbaugruppe 54 angeordnet, um sowohl im exspiratorischen wie auch im inspiratorischen Beatmungsgas-Hauptstrom den Sauerstoffgehalt des Beatmungsgases zu erfassen. Die Sensoranordnung 50, die weiter unten im Zusammenhang mit Fig. 5 näher erläutert werden wird, ist über eine Signalleitung 56 mit der Steuereinrichtung 18 gekoppelt und überträgt an diese die Erfassungsergebnisse ihrer Detektorbaugruppe 54 zur weiteren Auswertung.

In der Datenspeichereinrichtung der Steuereinrichtung 18 ist Kalibrationsinformation gespeichert, um die Erfassungsergebnisse der Sensoranordnung 50 hochgenau auszuwerten.

Die Sensoranordnung 50 ist zur temperaturkompensierten luminophorbasierten Erfassung des Partialdrucks des im das Gehäuse 52 durchströmenden Beatmungsgas enthaltenen Sauerstoffs ausgebildet. Sowohl die Temperaturkompensation als auch die Umrechnung der unmittelbar im Zusammenhang mit dem Sauerstoff-Partialdruck erhaltenen Erfassungswerte in eine Sauerstoffkonzentration bzw. einen Sauerstoffgehalt des Beatmungsgases erfolgt durch die Steuereinrichtung 18 anhand der hinterlegten Kalibrationsinformationen.

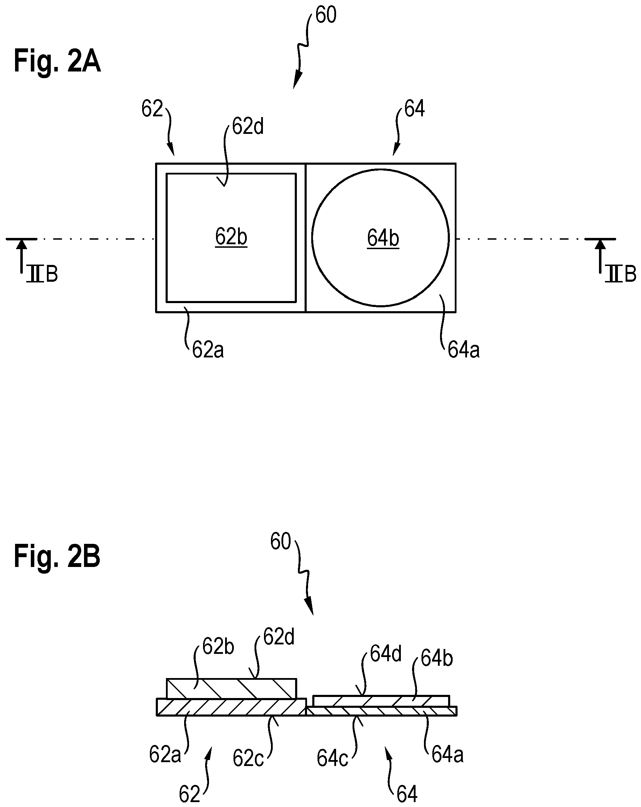

Die luminophorbasierte Erfassung eines Sauerstoffgehalts in einem Fluid ist an sich bekannt. Sie erfolgt im vorliegenden Ausführungsbeispiel unter Beteiligung einer in den Fig. 2A und 2B dargestellten und allgemein mit 60 bezeichneten Schichtbauteilanordnung der vorliegenden Erfindung. Sie umfasst zur optischen Erfassung eines Sauerstoffgehalts des Messobjekt-Fluids, wie des zuvor genannten Beatmungsgases, einen Reaktionsschichtkörper 62 (siehe auch Fig. 2B), welcher vorliegend als zweilagiger Reaktionsschichtkörper 62 dargestellt ist. Tatsächlich kann der Reaktionsschichtkörper 62 nur eine oder auch mehr als zwei Schichten aufweisen. Im dargestellten Beispiel - zu erkennen auch in der Querschnittsansicht von Fig. 2B - weist der Reaktionsschichtkörper 62 eine Substratlage 62a und eine darauf aufgetragene luminophorhaltige Reaktionsschicht 62b auf.

Die Verhältnisse von Länge und Breite des Reaktionsschichtkörpers 62 zu seiner Dicke sind in den Figuren nicht maßstäblich. Der in den Fig. 2A und 2B quadratisch dargestellte Reaktionsschichtkörper 62 kann eine Kantenlänge von etwa 7 bis 10 mm aufweisen, wobei seine Dicke über beide Schichten 62a und 62b gemessen etwa 300 µm betragen kann.

Die Substratlage 62a kann dabei aus einem für Sauerstoffmoleküle ausreichend porösen Werkstoff gebildet sein, wie beispielsweise Polyvinylidenfluorid. Die Substratlage 62a kann aus einer entsprechenden Folie ausgeschnitten sein und eine Dicke von zwischen 100 bis 150 µm aufweisen. Unter Umständen kann die Dicke der Substratlage auch geringer sein.

Die luminophorhaltige Reaktionsschicht 62b kann ebenfalls Polyvinylidenfluorid als Matrixmaterial enthalten, in welches Luminophore eingebettet sind.

Der Reaktionsschichtkörper 62 weist eine Fluidkontaktseite 62c und eine Erfassungsseite 62d auf.

Die luminophorhaltige Reaktionsschicht 62b kann etwas kleiner ausgebildet sein als die sie tragende Substratlage 62a, um die adhäsive Anbringung des Reaktionsschichtkörpers 62 mit der Erfassungsseite an einem Fensterbauteil oder allgemein an einem Gehäuse zu erleichtern, ohne hierdurch die Erfassungsseite der luminophorhaltigen Reaktionsschicht 62b mit Klebstoff belegen zu müssen.

Wie weiter unten im Zusammenhang mit Fig. 5 erläutert werden wird und wie grundsätzlich allgemein bekannt ist, wird die Reaktionsschicht 62b mit einer ersten elektromagnetischen Strahlung einer ersten Wellenlänge bestrahlt und dadurch zur Abstrahlung einer zweiten elektromagnetischen Strahlung mit einer zweiten, in der Regel größeren, Wellenlänge angeregt. Die Intensität und die Dauer der angeregten zweiten elektromagnetischen Strahlung hängt von der Präsenz von Sauerstoff, genauer von der Kontaktierung der in der Reaktionsschicht 62b eingebetteten Luminophore durch Sauerstoff ab. Außerdem ist das Abstrahlverhalten der Reaktionsschicht 62b temperaturabhängig.

Zur Temperaturkompensation der Erfassung des Abstrahlverhaltens des Reaktionsschichtkörpers 62 weist die Schichtbauteilanordnung 60 einen Temperatur-Erfassungsschichtkörper 64 auf, welcher im dargestellten Beispiel eine identisch große Fläche einnimmt wie der Reaktionsschichtkörper 62, wenngleich dies nicht zwingend notwendig ist.

Auch die Darstellung des Temperatur-Erfassungsschichtkörpers 64 ist hinsichtlich seiner Abmessungen nicht maßstäblich. Er weist im dargestellten Beispiel eine Kantenlänge in dem identischen Bereich auf wie der Reaktionsschichtkörper 62, ist jedoch aufgrund seines vom Reaktionsschichtkörper 62 abweichenden Aufbaus bevorzugt dünner als dieser.

Wiederum weist der Temperatur-Erfassungsschichtkörper 64 eine Substratlage 64a auf, aus Gründen möglichst guter Wärmeleitung beispielhaft gebildet aus einer Aluminiumfolie mit einer Dicke von etwa 10 µm oder auch weniger.

Auf der Substratlage 64a ist im dargestellten Ausführungsbeispiel eine Erfassungsschicht 64b aufgetragen, beispielsweise aus einem karbon-haltigen Lack. Der karbon-haltige Lack, wie er in der Beschreibungseinleitung beispielhaft angegeben ist, umfasst Karbon als schwarze Farbpigmente und weist daher einen sehr hohen Emissionsgrad von mehr als 0,9 auf.

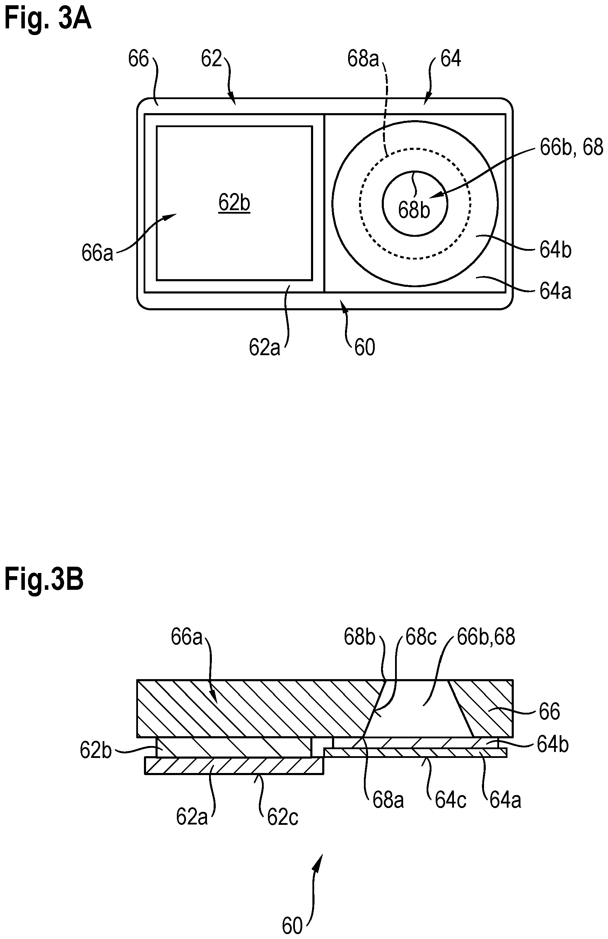

Da, wie nachfolgend im Zusammenhang mit den Fig. 3A und 3B erläutert werden wird, die von der Erfassungsschicht 64b ausgehende Infrarot-Strahlung durch ein beispielhaft kreisrundes Loch 68 erfasst wird, das längs seiner Lochachse, längs welcher sich das Loch 68 erstreckt, stets einen kreisrunden Querschnitt aufweist, ist auch die Erfassungsschicht 64b als Kreisfläche auf der beispielhaft quadratisch ausgestalteten Substratlage 64a ausgebildet.

Die von der Erfassungsschicht 64b weg weisende Oberfläche der Substratlage 64a liegt als Fluidkontaktseite 64c frei. Sie ist gebildet durch die metallische Oberfläche der die Substratlage 64a des Temperatur-Erfassungsschichtkörpers 64 bildenden Aluminiumfolie. Die Erfassungsseite 64d des Temperatur-Erfassungsschichtkörpers 64 bildet die freie Oberfläche der Erfassungsschicht 64b. Fluid kann also an der Schichtbauteilanordnung 60 auf deren Fluidkontaktseite 62c bzw. 64c vorbeiströmen, wobei durch die Substratlage 62a Sauerstoff zur luminophorhaltigen Reaktionsschicht 62b gelangt und dort für eine Ablöschung einer durch die erste elektromagnetische Strahlung erzeugten Anregung sorgt, während der Fluidkontakt an der Fluidkontaktseite 64c des Temperatur-Erfassungsschichtkörpers 64 allein dem Wärmeübertrag vom Fluid auf den Temperatur-Erfassungsschichtkörper 64 dient.

Wegen des ausgewählten Materials (Aluminium) für die Substratlage 64a und wegen ihrer geringen Dicke nimmt die Substratlage 64a im Millisekundenbereich die Temperatur des an seiner Fluidkontaktseite 64c vorbeiströmenden Fluids an und sorgt für eine Temperaturangleichung auch der Erfassungsschicht 64b, so dass mit einem Infrarot-Detektor an der Erfassungsseite 64d des Temperatur-Erfassungsschichtkörpers 64 ein zumindest mit der Temperatur des Messobjekt-Fluids in Zusammenhang stehender Temperaturwert erfassbar ist. Da der Reaktionsschichtkörper 62 mit dem gleichen Fluid in näherungsweise gleicher Art und Weise in Kontakt kommt, lässt die Erfassung der Temperatur der Erfassungsseite 64d des Temperatur-Erfassungsschichtkörpers 64 aufgrund der in der Datenspeichereinrichtung der Steuereinrichtung 18 hinterlegten Kalibrationsinformation Rückschlüsse auf die Temperatur der Erfassungsseite 62d der Reaktionsschicht 62b zu, was Voraussetzung für eine Temperaturkompensation der an dem Reaktionsschichtkörper 62 erhaltenen Messergebnisse betreffend den Sauerstoffgehalt des Messobjekt-Fluids ist.

Die Temperaturkompensation ist notwendig, da das Messobjekt-Fluid während seiner Vorbeiströmung an der Schichtbauteilanordnung 60 seine Temperatur ändern kann, beispielsweise weil einem Patienten in der Beatmungsvorrichtung von Fig. 1 Beatmungsluft mit einer niedrigeren Temperatur zugeführt wird, als diese nach dem Ausatmen exspiratorisch zurückgegeben wird.

Die Schichtbauteilanordnung 60 kommt daher in der Regel in dem Gehäuse 52 zur Anordnung, welches die Strömung des Messobjekt-Fluids während der Erfassung seines Sauerstoffgehalts und der Temperatur führt.

Die Erfassungsseiten 62d und 64d der beiden Schichtkörper 62 und 64 sind dabei vorteilhafterweise nach außen, also vom Messobjekt-Fluid weg gerichtet, während die Fluidkontaktseite 62c bzw. 64c der beiden Schichtkörper möglichst großflächig mit dem Fluid in Kontakt gelangt.

Um sicherzustellen, dass die Reaktionsschicht 62b nur von im Messobjekt-Fluid gelöstem Sauerstoff erreicht wird, ist der Reaktionsschichtkörper auf seiner Erfassungsseite von einem Fenster abgedeckt. Fig. 3A zeigt die Schichtbauteilanordnung 60 der Fig. 2A und 2B in der Draufsicht von Fig. 2A mit einem darüber angeordnetem Fensterbauteil 66. Das Fensterbauteil 66 ist Teil des in Fig. 1 gezeigten Gehäuses 52 der Sensoranordnung 50. Das Fensterbauteil kann aus einem transparenten Polyamid oder auch aus einem anderen für die erste und die zweite elektromagnetische Strahlung durchlässigen Kunststoff gebildet sein. Beispielsweise kann das Fensterbauteil 66 aus amorphem Poylamid gebildet sein, wie er unter dem Namen "Grilamid TR" von der Firma EMS-Chemie AG in Domat (CH) angeboten wird.

In seinem unmittelbar über der Reaktionsschicht 62b gelegenen Bereich bildet das Fensterbauteil 66 somit ein Reaktionsfenster 66a, durch welches hindurch die Reaktionsschicht 62b von erster elektromagnetischer Strahlung erreicht wird und die dadurch angeregte abgestrahlte zweite elektromagnetische Strahlung transmittiert wird.

Um den von der Erfassungsschicht 64b des Temperatur-Erfassungsschichtkörpers 64 abgestrahlte Infrarot-Strahlung möglichst unverfälscht erfassen zu können, ist im Fensterbauteil 66 unmittelbar über dem Ort der Anordnung des Temperatur-Erfassungsschichtkörpers ein Erfassungsfenster 66b ausgebildet, welches als sich negativ-konisch von der von der Schichtbauteilanordnung 60 weg weisenden Seite hin zur Erfassungsschicht 64b erweiterndes, das Fensterbauteil 66 in seiner gesamten Dicke durchsetzendes Loch 68 ausgebildet ist.

Der kreisrunde Lochrand 68a auf der der Erfassungsschicht 64b zugewandten Seite des Fensterbauteils 66 ist durchmessergrößer als der konzentrische Lochrand 68b des Lochs 68 auf der von der Erfassungsschicht 64b abgewandten Seite des Fensterbauteils 66. Die sich zwischen den beiden Lochrändern 68a und 68b erstreckende negativ-konische Lochwand 68c ist bevorzugt beschichtet, besonders bevorzugt verspiegelt, um Störeinflüsse von Strahlungsanteilen, die durch das Fensterbauteil 66 geleitet werden könnten, zu minimieren bzw. auszuschließen.

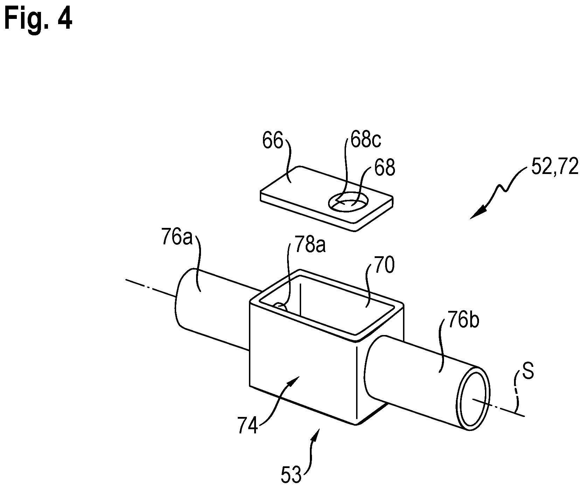

In Fig. 4 ist das Gehäuse 52 der Sensoranordnung 50 in einer Art Explosionsansicht dargestellt.

Das Gehäuse 52 umfasst ein Grundgehäuse 53 und das Fensterbauteil 66 mit der daran angeordneten, in Fig. 4 jedoch nicht zu erkennenden Schichtbauteilanordnung 60. Mit dem Fensterbauteil 66 kann eine Öffnung 70 im Grundgehäuse 53 verschlossen werden, so dass dann das Gehäuse 52 geschlossen ist und aufgrund der Anordnung der Schichtbauteilanordnung 60 darin die Reaktionsbaugruppe 72 bildet.

Das Gehäuse 52 weist zu beiden Seiten des unter Beteiligung des Fensterbauteils 66 gebildeten parallelepipedförmigen Abschnitts 74 Anschlussstutzen 76a und 76b zum Anschluss von Beatmungsleitungsabschnitten daran auf.

Das Gehäuse 52 ist bidirektional längs der Strömungsachse S durchströmbar.

In Fig. 5 ist die Sensoranordnung 50 grobschematisch im Querschnitt dargestellt.

Das Gehäuse 52 ist zwischen seinen beiden Öffnungen 78a und 78b längs der Strömungsachse S bidirektional von Beatmungsgas durchströmbar. Dabei strömt das Beatmungsgas unter Kontaktierung der Fluidkontaktseiten 62c und 64c der Schichtkörper 62 und 64 an diesen vorbei. Die Strömungsachse S liegt in der Zeichenebene von Fig. 5.

Die Sensoranordnung 54, welche lösbar am Gehäuse 52 angeordnet werden kann und hierzu den parallelepipedförmigen Abschnitt 74 von drei Seiten U-förmig umgibt, wobei die Basis des "U" dem Fensterbauteil 66 gegenüberliegt, umfasst zwei Messkammern 80 und 82, welche baulich voneinander getrennt sind.

In der Messkammer 80 ist eine Strahlungsquelle 82, beispielsweise in Form einer LED, vorgesehen, welche elektromagnetische Strahlung E1 einer ersten Wellenlänge ausstrahlt. Um das Wellenlängenband der von der Strahlungsquelle 82 ausgehenden ersten elektromagnetischen Strahlung möglichst eng zu halten und Störstrahlung zu vermeiden, kann die Strahlungsquelle 82 vorteilhafterweise von einem Filterkörper 84 umgeben sein, welcher erste elektromagnetische Strahlung E1 mit der genannten Wellenlänge mit einer möglichst kleinen Toleranz durchlässt.

Weiter ist in der ersten Messkammer 80 ein Strahlungsdetektor 86 angeordnet, welcher eine von der Reaktionsschicht 62b nach deren Anregung durch die erste elektromagnetische Strahlung E1 ausgehende zweite elektromagnetische Strahlung E2 erfasst. Auch dem Strahlungsdetektor 86 kann ein Strahlungsfilter 88 vorgelagert sein, um nur die zweite elektromagnetische Strahlung E2 mit ihrer von der ersten Wellenlänge verschiedenen zweiten Wellenlänge durchzulassen. Durch die Filteranordnungen 84 und 88 kann sichergestellt werden, dass keine Strahlung direkt von der Strahlungsquelle 82 zum Strahlungsdetektor 86 gelangt und das dort erfasste Signal "verrauscht".

Das vom Strahlungsdetektor 86 aufgrund seiner Erfassung der zweiten elektromagnetischen Strahlung E2 ausgegebene Signal wird über die in Fig. 1 gezeigte Datenleitung 56 an die Steuereinrichtung 18 übertragen. Es ist in an sich bekannter Weise indikativ für den Sauerstoff-Partialdruck in dem das Gehäuse 52 durchströmenden Fluid.

In der zweiten Messkammer 82 ist ein Infrarot-Detektor 90 angeordnet, welcher von der Erfassungsschicht 64b abgestrahlte Infrarot-Strahlung I erfasst. Auch das vom Infrarot-Detektor 90 aufgrund seiner Erfassung der Infrarot-Strahlung I ausgegebene Signal wird über die Datenleitung 56 an die Steuereinrichtung 18 übertragen. Dieses Signal ist indikativ für eine Temperatur der Erfassungsschicht 64b.

Aufgrund der in der Datenspeichereinrichtung der Steuereinrichtung 18 hinterlegten Kalibrationsinformation, welche vor dem Einsatz der Schichtbauteilanordnung 60 abseits im Labor ermittelt wurde, kann die Steuereinrichtung 18 für jeden Erfassungszeitpunkt eines Signals des Strahlungsdetektors 86 die Temperatur der Reaktionsschicht 62b aus dem Erfassungssignal des Infrarot-Detektors 90 ermitteln und so das Erfassungssignal des Strahlungsdetektors 86 bezüglich der Temperatur des abstrahlenden Reaktionssichtkörpers 62 bzw. der Reaktionsschicht 62b desselben kompensieren. Das Ergebnis ist eine hochgenaue Bestimmung des SauerstoffPartialdrucks in dem das Gehäuse 52 durchströmenden Fluid als zeitlich variable Größe.

Die hochgenaue Temperaturkompensation wird dabei mit äußerst einfachen Mitteln erreicht, wie beispielsweise der Metallfolie 64a als Substrat und der darauf aufgetragenen Erfassungsschicht 64b. Die Verwendung der Metallfolie 64a (Aluminiumfolie) gestattet, das Fensterbauteil 66 bzw. allgemein das Gehäuse 52 zur Ausbildung eines Erfassungsfensters 68 vollständig zu durchsetzen, so dass die von der Erfassungsschicht 64b als Infrarot-Strahlung abgestrahlte Temperaturinformation mit geringstmöglicher Verfälschung den Infrarot-Detektor 90 erreicht.

Die Steuereinrichtung 18 kann weitere Kalibrationsinformation in einem Datenspeicher enthalten, die die übliche Umrechnung des mit der Erfassung der zweiten elektromagnetischen Strahlung unmittelbar in Zusammenhang stehenden Sauerstoffpartialdrucks des Fluids in einen Sauerstoffgehalt desselben ermöglicht.

## Patentansprüche

1. Flächige Schichtbauteilanordnung (60) zur temperaturkompensierten optischen Erfassung eines Sauerstoffgehalts eines Fluids, wobei die flächige Schichtbauteilanordnung (60) umfasst:
- einen eine Schicht oder mehrere Schichten (62a, 62b) umfassenden luminophorhaltigen Reaktionsschichtkörper (62), dessen Luminophor durch Bestrahlung mit einer ersten elektromagnetischen Strahlung (E1) einer ersten Wellenlänge zur Abstrahlung einer zweiten elektromagnetischen Strahlung (E2) einer von der ersten Wellenlänge verschiedenen zweiten Wellenlänge anregbar ist, wobei das angeregte Abstrahlverhalten des Luminophors abhängig von einem Sauerstoffpartialdruck in einem den Luminophor kontaktierenden Fluid ist, und
- einen eine Schicht oder mehrere Schichten (64a, 64b) umfassenden, Infrarot-Strahlung (I) emittierenden Temperatur-Erfassungsschichtkörper (64),
wobei der Reaktionsschichtkörper (62) und der Temperatur-Erfassungsschichtkörper (64) gesondert voneinander ausgebildet und räumlich getrennt voneinander angeordnet sind, wobei der Temperatur-Erfassungsschichtkörper (64) frei von Luminophor ist.

2. Schichtbauteilanordnung (60) nach Anspruch 1,
**dadurch gekennzeichnet, dass** der Reaktionsschichtkörper (62) wenigstens abschnittsweise hinsichtlich Schichtmaterial oder/und Schichtfolge oder/und Schichtdicke einen anderen Schichtaufbau aufweist als der Temperatur-Erfassungsschichtkörper (64).

3. Schichtbauteilanordnung (60) nach Anspruch 1,
**dadurch gekennzeichnet, dass** der Reaktionsschichtkörper (62) und der Temperatur-Erfassungsschichtkörper (64) derart räumlich getrennt angeordnet sind, dass nur der Reaktionsschichtkörper (62) mit der ersten elektromagnetischen Strahlung (E1) bestrahlbar ist und dass nur vom Temperatur-Erfassungsschichtkörper (64) ausgehende Infrarot-Strahlung (I) erfassbar ist.

4. Schichtbauteilanordnung (60) nach einem der vorhergehenden Ansprüche,
**dadurch gekennzeichnet, dass** der Reaktionsschichtkörper (62) und der Temperatur-Erfassungsschichtkörper (64) jeweils eine Fluidkontaktseite (62c, 64c) aufweisen, auf welcher der jeweilige Schichtkörper (62, 64) zum Kontakt mit dem Fluid ausgebildet ist, und eine der Fluidkontaktseite (62c, 64c) entgegengesetzte Erfassungsseite (62c,64d) aufweisen, welche zum Zusammenwirken mit Strahlungsdetektoren (86, 90) ausgebildet ist.

5. Schichtbauteilanordnung (60) nach einem der vorhergehenden Ansprüche,
**dadurch gekennzeichnet, dass** der Temperatur-Erfassungsschichtkörper eine Substratlage mit einer materialidentischen Emissionsschicht aufweist, wobei die Emissionsschicht auf einer Erfassungsseite durch mechanisches oder/und chemisches Aufrauen der Oberfläche der Substratlage auf der Erfassungsseite gebildet ist.

6. Reaktionsbaugruppe (72), umfassend ein Gehäuse (52) und eine im Gehäuse (52) vorgesehene Schichtbauteilanordnung (60) gemäß einem der vorhergehenden Ansprüche, wobei das Gehäuse (52) eine Öffnung (78a, 78b) aufweist, durch welche hindurch ein Fluid in das Gehäuse (52) einleitbar ist, wobei das Gehäuse (52) ein Reaktionsfenster (66a) aufweist, durch welches hindurch der Reaktionsschichtkörper (62) von der ersten elektromagnetischen Strahlung (E1) erreichbar und welches von der zweiten elektromagnetischen Strahlung (E2) durchdringbar ist, und wobei das Gehäuse (52) ein vom Reaktionsfenster (66a) räumlich entfernt angeordnetes Temperatur-Erfassungsfenster (66b) aufweist, welches von der vom Temperatur-Erfassungsschichtkörper (64) abgestrahlten Infrarotstrahlung (I) durchdringbar ist.

7. Reaktionsbaugruppe (72) nach Anspruch 6,
**dadurch gekennzeichnet, dass** das Reaktionsfenster (66a) konstruktiv vom Temperatur-Erfassungsfenster (66b) verschieden ausgebildet ist.

8. Reaktionsbaugruppe (72) nach Anspruch 7,
**dadurch gekennzeichnet, dass** das Reaktionsfenster (66a) dicker ist als das Temperatur-Erfassungsfenster (66b).

9. Reaktionsbaugruppe (72) nach Anspruch 8,
**dadurch gekennzeichnet, dass** das Reaktionsfenster (66a) ein für Licht im optisch wahrnehmbaren Wellenlängenbereich transparentes Material aufweist und dass das Temperatur-Erfassungsfenster (66b) ein das Gehäuse (52) durchsetzendes Loch (68) umfasst, das durch den Temperatur-Erfassungsschichtkörper (64) bedeckt ist.

10. Reaktionsbaugruppe (72) nach einem der Ansprüche 6 bis 9,
**dadurch gekennzeichnet, dass** das Gehäuse (52) eine von der Öffnung (78a) verschiedene und entfernt von dieser gelegene weitere Öffnung (78b) derart aufweist, dass das Gehäuse (52) zwischen der Öffnung (78a) und der weiteren Öffnung (78b) von Fluid durchströmbar ist.

11. Reaktionsbaugruppe (72) nach Anspruch 10,
**dadurch gekennzeichnet, dass** die Schichtbauteilanordnung (60) zwischen der Öffnung (78a) und der weiteren Öffnung (78b) vorgesehen ist.

12. Reaktionsbaugruppe (72) nach Anspruch 10 oder 11,
**dadurch gekennzeichnet, dass** sie zur Anordnung in einer Beatmungsleitungsanordnung (30) einer Beatmungsvorrichtung (10) ausgebildet ist, wobei die Reaktionsbaugruppe (72) im Bereich sowohl der Öffnung (78a) als auch der weiteren Öffnung (78b) mit je einer Anschlussformation (76a, 76b) zur Verbindung mit je einem Abschnitt der Beatmungsleitungsanordnung (30) ausgebildet ist.

13. Sensoranordnung (50), umfassend eine Reaktionsbaugruppe (72) gemäß einem der Ansprüche 7 bis 13 und weiter umfassend eine Detektorbaugruppe (54), umfassend
- eine Strahlungsquelle (82), welche zur Abstrahlung der ersten elektromagnetischen Strahlung (E1) durch das Reaktionsfenster (66a) ausgebildet ist,
- einen Strahlungsdetektor (86), welcher zur Erfassung der zweiten elektromagnetischen Strahlung (E2) durch das Reaktionsfenster (66a) ausgebildet ist, und
- einen Infrarot-Detektor (90), welcher zur Erfassung der vom Temperatur-Erfassungsschichtkörper (64) abgestrahlten Infrarot-Strahlung (I) durch das Temperatur-Erfassungsfenster (66b) ausgebildet ist.

14. Sensoranordnung (50) nach Anspruch 13,
**dadurch gekennzeichnet, dass** die Detektorbaugruppe (54) lösbar mit der Reaktionsbaugruppe (72) verbindbar oder verbunden ist.

## Claims

1. A flat layer component arrangement (60) for temperature-compensated optical detection of an oxygen content of a fluid, the flat layer component arrangement (60) comprising:
- a luminophore-containing reaction layer body (62) comprising one or more layers (62a, 62b), the luminophore of which can be excited by irradiation with a first electromagnetic radiation (E1) of a first wavelength to radiate a second electromagnetic radiation (E2) of a second wavelength different from the first wavelength, the excited emission behaviour of the luminophore is dependent on an oxygen partial pressure in a fluid contacting the luminophore, and
- a temperature-detecting layer body (64) comprising one or more layers (64a, 64b) and emitting infrared radiation (I),
**characterised in that** the reaction layer body (62) and the temperature-detecting layer body (64) are formed separately from each other and are arranged spatially separated from each other, the temperature-detecting layer body (64) being free of luminophore.

2. The layer component arrangement (60) according to claim 1,
**characterised in that** the reaction layer body (62) has a different layer structure, at least in some sections, with respect to layer material and/or layer sequence and/or layer thickness than the temperature-detecting layer body (64).

3. The layer component arrangement (60) according to claim 1,
**characterised in that** the reaction layer body (62) and the temperature-detecting layer body (64) are arranged spatially separated in such a way that only the reaction layer body (62) can be irradiated with the first electromagnetic radiation (E1) and that only infrared radiation (I) emanating from the temperature-detecting layer body (64) can be detected.

4. The layer component arrangement (60) according to one of the preceding claims,
**characterised in that** the reaction layer body (62) and the temperature detection layer body (64) each have a fluid contact side (62c, 64c) on which the respective layer body (62, 64) is designed to come into contact with the fluid, and a detection side (62c, 64c) opposite the fluid contact side (62c, 64c) 4d) which is designed to interact with radiation detectors (86, 90).

5. The layer component arrangement (60) according to one of the preceding claims,
**characterised in that** the temperature-detecting layer body has a substrate layer with an emission layer of identical material, wherein the emission layer is formed on a detection side by mechanical and/or chemical roughening of the surface of the substrate layer on the detection side.

6. A reaction assembly (72) comprising a housing (52) and a layer component arrangement (60) provided in the housing (52) according to any one of the preceding claims, the housing (52) having an opening (78a, 78b) through which a fluid can be introduced into the housing (52), the housing (52) has a reaction window (66a) through which the reaction layer body (62) can be reached by the first electromagnetic radiation (E1) and which can be penetrated by the second electromagnetic radiation (E2), and the housing (52) has a temperature-detecting window (66b) arranged at a distance from the reaction window (66a) 6b) which can be penetrated by the infrared radiation (I) radiated by the temperature-detecting layer body (64).

7. The reaction assembly (72) according to claim 6,
**characterised in that** the reaction window (66a) is designed to be structurally different from the temperature-detecting window (66b).

8. The reaction assembly (72) according to claim 7,
**characterised in that** the reaction window (66a) is thicker than the temperature detection window (66b).

9. The reaction assembly (72) according to claim 8,
**characterised in that** the reaction window (66a) comprises a material transparent to light in the optically perceptible wavelength range and **in that** the temperature detection window (66b) comprises a hole (68) passing through the housing (52) and covered by the temperature detection layer body (64).

10. The reaction assembly (72) according to any one of claims 6 to 9,
**characterised in that** the housing (52) has a further opening (78b) distinct from and remote from the opening (78a) such that fluid can flow through the housing (52) between the opening (78a) and the further opening (78b).

11. The reaction assembly (72) according to claim 10,
**characterised in that** the laminar component assembly (60) is provided between the opening (78a) and the further opening (78b).

12. The reaction assembly (72) according to claim 10 or 11,
**characterised in that** it is adapted for disposition in a breathing conduit assembly (30) of a breathing apparatus (10), the reaction assembly (72) being formed with a respective attachment formation (76a, 76b) in the region of each of the opening (78a) and the further opening (78b) for connection to a respective portion of the breathing conduit assembly (30).

13. A sensor assembly (50) comprising a reaction assembly (72) according to any one of claims 7 to 13 and further comprising a detector assembly (54) comprising
- a radiation source (82) configured to radiate the first electromagnetic radiation (E1) through the reaction window (66a),
- a radiation detector (86) which is designed to detect the second electromagnetic radiation (E2) through the reaction window (66a), and
- an infrared detector (90) which is designed to detect the infrared radiation (I) radiated from the temperature detection layer body (64) through the temperature detection window (66b).

14. The sensor arrangement (50) according to claim 13,
**characterised in that** the detector assembly (54) is removably connected or connectable to the reaction assembly (72).

## Revendications

1. Ensemble de composants en couches planes (60) pour la détection optique compensée en température d'une teneur en oxygène d'un fluide, l'ensemble de composants en couches planes (60) comprenant :
- un corps stratifié de réaction (62) contenant un luminophore, comprenant une couche ou plusieurs couches (62a, 62b), dont le luminophore est excitable par irradiation avec un premier rayonnement électromagnétique (E1) d'une première longueur d'onde pour émettre un deuxième rayonnement électromagnétique (E2) d'une deuxième longueur d'onde différente de la première longueur d'onde, le comportement d'émission excité du luminophore dépendant d'une pression partielle d'oxygène dans un fluide en contact avec le luminophore, et
- un corps stratifié de détection de température (64) comprenant une couche ou plusieurs couches (64a, 64b) et émettant un rayonnement infrarouge (I),
**caractérisé en ce que** le corps stratifié de réaction (62) et le corps stratifié de détection de température (64) sont formés séparément l'un de l'autre et sont disposés séparément dans l'espace, le corps stratifié de détection de température (64) étant exempt de luminophore.

2. Ensemble de composants stratifiés (60) selon la revendication 1,
**caractérisé en ce que** le corps stratifié de réaction (62) présente, au moins par sections, une autre structure stratifiée que le corps stratifié de détection de température (64) en ce qui concerne le matériau de la couche ou/et la succession de couches ou/et l'épaisseur de la couche.

3. Ensemble de composants stratifiés (60) selon la revendication 1,
**caractérisé en ce que** le corps stratifié de réaction (62) et le corps stratifié de détection de température (64) sont disposés séparément dans l'espace de telle sorte que seul le corps stratifié de réaction (62) peut être irradié par le premier rayonnement électromagnétique (E1) et que seul le rayonnement infrarouge (I) émis par le corps stratifié de détection de température (64) peut être détecté.

4. Ensemble de composants stratifiés (60) selon l'une des revendications précédentes,
**caractérisé en ce que** le corps stratifié de réaction (62) et le corps stratifié de détection de température (64) présentent chacun un côté de contact avec le fluide (62c, 64c) sur lequel le corps stratifié respectif (62, 64) est conçu pour être en contact avec le fluide, et un côté de détection (62c, 64d) opposé au côté de contact avec le fluide (62c, 64c), qui est conçu pour coopérer avec des détecteurs de rayonnement (86, 90).

5. Ensemble de composants stratifiés (60) selon l'une quelconque des revendications précédentes,
**caractérisé en ce que** le corps stratifié de détection de température présente une couche de substrat avec une couche d'émission de matériau identique, la couche d'émission étant formée sur une face de détection par un grainage mécanique ou/et chimique de la surface de la couche de substrat sur la face de détection.

6. Ensemble de réaction (72), comprenant un boîtier (52) et un ensemble de composants stratifiés (60) selon l'une des revendications précédentes prévu dans le boîtier (52), le boîtier (52) présentant une ouverture (78a, 78b) à travers laquelle un fluide peut être introduit dans le boîtier (52), le boîtier (52) présentant une fenêtre de réaction (66a), à travers laquelle le corps stratifié de réaction (62) peut être atteint par le premier rayonnement électromagnétique (E1) et qui peut être traversée par le deuxième rayonnement électromagnétique (E2), et le boîtier (52) présentant une fenêtre de détection de température (66b) disposée à distance de la fenêtre de réaction (66a), laquelle peut être traversée par le rayonnement infrarouge (I) émis par le corps stratifié de détection de température (64).

7. Ensemble de réaction (72) selon la revendication 6,
**caractérisé en ce que** la fenêtre de réaction (66a) est réalisée de manière différente de la fenêtre de détection de température (66b).

8. Ensemble de réaction (72) selon la revendication 7,
**caractérisé en ce que** la fenêtre de réaction (66a) est plus épaisse que la fenêtre de détection de température (66b).

9. Ensemble de réaction (72) selon la revendication 8,
**caractérisé en ce que** la fenêtre de réaction (66a) comprend un matériau transparent à la lumière dans la plage de longueurs d'onde optiquement perceptible et **en ce que** la fenêtre de détection de température (66b) comprend un trou (68) traversant le boîtier (52) et recouvert par le corps de couche de détection de température (64).

10. Ensemble de réaction (72) selon l'une quelconque des revendications 6 à 9,
**caractérisé en ce que** le boîtier (52) présente une autre ouverture (78b) différente de l'ouverture (78a) et située à distance de celle-ci, de telle sorte que le boîtier (52) peut être traversé par un fluide entre l'ouverture (78a) et l'autre ouverture (78b).

11. Ensemble de réaction (72) selon la revendication 10,
**caractérisé en ce que** l'ensemble de composants stratifiés (60) est prévu entre l'ouverture (78a) et l'autre ouverture (78b).

12. Ensemble de réaction (72) selon la revendication 10 ou 11,
**caractérisé en ce qu'**il est conçu pour être disposé dans un agencement de conduit de ventilation (30) d'un dispositif de ventilation (10), l'ensemble de réaction (72) étant conçu dans la zone de l'ouverture (78a) ainsi que de l'autre ouverture (78b) avec une formation de raccordement (76a, 76b) respective pour la liaison avec une section respective de l'agencement de conduit de ventilation (30).

13. Ensemble de détection (50) comprenant un ensemble de réaction (72) selon l'une quelconque des revendications 7 à 13 et comprenant en outre un ensemble de détection (54) comprenant
- une source de rayonnement (82) configurée pour émettre le premier rayonnement électromagnétique (E1) à travers la fenêtre de réaction (66a),
- un détecteur de rayonnement (86) conçu pour détecter le deuxième rayonnement électromagnétique (E2) à travers la fenêtre de réaction (66a), et
- un détecteur infrarouge (90), qui est conçu pour détecter le rayonnement infrarouge (I) émis par le corps stratifié de détection de température (64) à travers la fenêtre de détection de température (66b).

14. Ensemble de détection (50) selon la revendication 13,
**caractérisé en ce que** l'ensemble de détection (54) est connectable ou est connecté de manière amovible à l'ensemble de réaction (72).
